# EUROPEAN PATENT SPECIFICATION

(11) **EP 1 529 371 B1**
(45) Date of publication and mention of the grant of the patent: **24.11.2010**
(21) Application number: 03721242.0
(22) Date of filing: 25.04.2003
(51) Int. Cl.: H04L 12/14

(54) **MONITORING OF DIGITAL CONTENT PROVIDED FROM A CONTENT PROVIDER OVER A NETWORK**
ÜBERWACHEN DIGITALER INHALTE, DIE VON EINEM INHALTE-ANBIETER ÜBER EIN NETZ BEREITGESTELLT WERDEN
SURVEILLANCE D'UN CONTENU NUMERIQUE FOURNI PAR UN FOURNISSEUR DE CONTENU SUR UN RESEAU

(30) Priority: 15.08.2002 SE 0202450
(43) Date of publication of application: 11.05.2005
(73) Proprietor: Telefonaktiebolaget LM Ericsson (publ), 164 83 Stockholm (SE)
(72) Inventor: NÄSLUND, Mats, S-162 58 Vällingby (SE); SELANDER, Göran, S-117 37 Stockholm (SE); BJÖRKENGREN, Ulf, S-237 34 Bjärred (SE)
(74) Representative: Norin, Klas
(86) International application number: PCT/SE2003/000664
(87) International publication number: WO 2004/017560

(56) References cited:
- WO-A1-01/98956
- WO-A1-02/37822
- WO-A1-03/003654
- WO-A2-02/19593
- WO-A2-02/31760
- US-A1- 2001 053 223

## Description

### TECHNICAL FIELD

The present invention generally relates to digital rights management (DRM) for managing digital content provided over networks, and more particular to monitoring usage of digital content by a client in a DRM system.

### BACKGROUND

The distribution of digital content or media data using modern digital communication technologies is constantly growing, increasingly replacing the more traditional distribution methods. In particular, there is an increasing trend of downloading or streaming digital content from a content provider to a client or user, which then typically renders the content using a rendering device according to some user rights, or usage rules specified in a license associated with the digital content. Due to the advantages of this form of content distribution, including being inexpensive, fast and easy to perform, applications can now be found for distribution of all types of media, such as audio, video, images, electronic books and software.

However, with this new way of distributing digital media content comes the need for protecting the content provider's digital assets against unauthorized usage and illegal copying. Copyright holders and creators of digital content naturally have a strong economic interest of protecting their rights, and this has lead to an increasing demand for digital rights management (DRM). DRM is generally a technology for protecting the content provider's assets in a digital content distribution system, including protecting, monitoring and restricting the usage of the digital content as well as handling payment. A DRM system thus normally includes components for encryption, authentication, key management, usage rule management and charging.

The most basic threats to a DRM system include eavesdropping, illegal copying, modification of usage rules, and repudiation of order or delivery of content. Most of these basic security problems are solved by standard cryptographic techniques, including encryption, authentication and key management. However, what basically distinguishes the security problems of a DRM system from other general security problems is that not even the other end-part of the communication (the user) is completely trusted. In fact, the end-user might want to try to fraudulently extend his usage rights, for example rendering the media content more times than he has paid for or illegally copying the digital content to another rendering device. Therefore, some form of rule-enforcement is required in the user's rendering device. To this end, a DRM agent implemented as tamper-resistant circuit in the rendering device and some formal language expressing the usage rules are commonly used together with the basic cryptographic techniques mentioned above.

However, while the DRM agent (at least theoretically) enforces the usage rules and keeps the usage according to the license, it per se does not guarantee that the user will not repudiate the usage of the digital content. For example, the user may have paid to watch a downloaded movie three times, but claims that due to some malfunctions he was only able to watch it twice. The user then disagrees with the content provider about the number of renderings he has consumed. This can easily escalate into a legal process, especially if it regards a high valued digital content, for which the user has paid a large sum of money for the usage rights.

The prior art DRM systems and rendering devices incorporating DRM agents do not provide any mechanisms to minimize the risk of disagreement between the user and DRM agent, discussed above, or in the case it has happened, any mechanisms to support the defense of the DRM agent and thereby support the defense of the content provider, device manufacturer and the DRM system manufacturer.

The document US 2001 053 223 A1 to Ishibashi (hereafter referred to as Ishibashi) et al discloses logging of content usage for charging purposes. Ishibashi generates logging information related to the downloading of contents used at a user device. Ishibashi, however, does not provide for logging of the actual rendering of contents exemplary including quality of rendering as perceived by the user.

### SUMMARY

The present invention overcomes these and other drawbacks of the prior art arrangements.

It is a general object of the present invention to provide a digital-content-usage monitoring functionality in a DRM system for streamed or downloaded data.

It is another object of the invention to deter users from repudiating usage of digital content received from a content provider over a network.

Yet another object of the invention is to provide a client system incorporating a logging agent for logging information of usage of received digital content according to logging criteria.

A further object of the invention is to provide effective and flexible downloading and implementation of logging agents in client systems.

It is also an object of the invention to provide a digital-content-usage monitoring functionality that is useful as basis for charging of usage of digital content.

These and other objects are met by the invention as defined by the accompanying patent claims.

Briefly, the present invention involves arranging or implementing a logging agent in a client system or module employed for using digital content ordered and received from a content provider over a network, e.g. Internet or a wireless network for mobile communication. This logging agent monitors the usage of the content, performed by the client, by logging information concerning the usage individually for each usage to be monitored. The generated usage information is then linked or associated with the client or user, enabling identification from which client (user) the usage information originates.

This linking is preferably obtained by performing a security operation, such as performing, at least a part of an authentication of the usage information. The now generated and authenticated usage information is then stored as a log entry in a log, either arranged in the client system or provided externally by a trusted party, e.g. a network operator.

The usage performable by the client includes rendering or playing, saving, forwarding, copying, executing, deleting and/or modifying the digital content. Usage rights or rules of the relevant methods of client-usage to be monitored are preferably specified in a license or ticket associated with the digital content.

The security operation of the invention for enabling identification of the client by linking the logged usage information thereto can be performed in a number of different ways. Firstly, as was mentioned above, at least part of an authentication of the usage information can be performed by the client. This authentication could be a signing of the usage information using a private signing key of an asymmetric key pair, where the associated public verification key together with a certificate on the public key is certified by a trusted party, e.g. the network operator. Alternatively, an authentication tag based on symmetric keys can be appended to the logged usage information, allowing identification from whom the information is derived by involving a trusted third party knowing the symmetric key. The origin of the usage information could also, at least implicitly, be identified by encrypting or cryptographically protecting the usage information with a protected key. Alternatively, the client could send the generated usage information to a trusted third party, which performs the actual security operation. Another possible security operation is to store the logged usage information in an environment that is inaccessibly for the user, but associated thereto or to the client system. A typical example is the environment of a subscriber identity module (SIM). For activating the SIM environment the user typically enters a pin code or personal security code. However, although the environment is activated and the logging agent can store the logged usage information on this secure area, the user actually has no physical access thereto, i.e. is not able to modify or delete the log from the SIM. Since the SIM is issued by a (network) service provider and is associated with a service agreement (subscription) between the user and the service provider, it is, thus, subsequently possible to associate the SIM and consequently the log stored thereon with the user.

By logging or recording information of client usage, the logging agent according to the invention has a repudiation deterring effect on users, lowering the risk that the users violate usage rules of ordered digital content. The generated usage log can also be used if a disagreement between the user and the content provider (through a DRM agent implemented in the client system for enforcing usage according to the usage rules) is present. By simply investigating the log, information about the actual number of usages performed by the client, when they were performed, the usage quality obtained during the rendering session (depending on what is included in the usage information) can be retrieved and used to help solve any disputes.

The logged usage information of the invention can also be used as a basis for charging of the usage of the digital content. The information then specifies either the amount to be charged or some other information, e.g. the total time of usage and an identifier of the digital content, allowing calculation of the amount to be charged. In such a case, the logged usage information is preferably transmitted to the network operator or a billing institute managing charges of order digital content. Due to the security operation discussed above the operator or institute can identify the user to be charged or an account to be charged.

The usage information includes elements, which concern the actual usage of the digital content. The elements may comprise a representation of the digital content e.g. the associated file name or a fingerprint of the content, including the content itself or a hash function value thereof. In addition, information of usage quality may be included, e.g. specifying the bandwidth and/or resolution of the content and/or the obtained sample rate if the content is delivered as streaming data. The usage time of the content is preferably also found in the information.

The logging agent is preferably implemented in software, hardware or a combination thereof in a DRM agent of the client system or module, or in connection with a usage device, which performs the actual usage of the digital content, associated with the module. In order to prevent an attacker from illegally accessing and modifying the generated usage information, the information is preferably cryptographically protected using an encryption/authentication key. The associated decryption/verification key can then be stored at a trusted party. However, if symmetric cryptographic keys or public keys are used, the decryption/verification key is typically merely certified by that trusted party and stored elsewhere.

The security of the logging agent is also increased by implementing it in a tamper-resistant device, which can be removably arranged in the client system for allowing the device, including the logging agent, to be moved between different client systems. In such a case, the client system, or the usage device of the client system, is preferably configured for not allowing usage of digital content without the removable temper-resistantly implemented logging agent being present. A preferred tamper-resistant module is a network subscriber identity module (SIM) issued by a (network) service provider, e.g. standard SIM cards used in GSM (Global System for Mobile Communications) mobile telephones but also LTMTS (Universal Mobile Telecommunications System) SIM (SIM), WIM (Wireless Identity Module), ISIM (Internet Multimedia Services Identity Module) cards, and UICC (Universal Integrated Circuit Card) modules can be used. When implemented on a SIM, the logging agent can use the authentication and cryptographic functions of the SIM for use on the usage information. In addition, keys associated with the SIM subscription can be used for performing usage information authentication and encryption and for billing purposes.

In addition, the logging agent can be implemented in an application environment provided by an application toolkit associated with the SIM, e.g. SAT (SIM Application Toolkit) or USAT (UMTS SAT). The SIM may be pre-manufactured with the logging agent or the logging agent may be securely (preferably authenticated and encrypted) downloaded from a network node, associated with the network operator or service provider associated with the SIM. Commands, associated with the SIM - client module interface, are used for downloading and implementing the logging agent in the application environment. The same commands can also be used for subsequently receive and implement upgrades of the logging agent and to transfer the actual log information to a trusted party.

The logging agent according to the present invention may be arranged in any client system adapted for receiving digital content over a network, including personal computers, mobile units, e.g. mobile telephones, personal digital assistants, communicators, Mp3 players, etc.

The invention offers the following advantages:
- Provides strengthened defense for equipment manufacturer, network operator and content provider (and rights issuer) in a situation where a dispute is present, on whether usage of digital content by a client system actually has been performed or not;
- Deters users from repudiating usage of the digital content according to usage rules associated with the content or by trying to violate the rules;
- Provides information that can be used for charging a client for usage of ordered and downloaded or streamed digital content;
- From the end-user point of view, the invention can provide flexible and upgradable implementation of logging agents, as well as "portability" between different client systems;
- Strengthens the end-user's possibility to get refunded in cases where he/she does not receive the service or quality paid for;
- A network operator can efficiently manage and upgrade logging agents connected to the network, and the invention also opens up new business possibilities for the operator acting as a trusted center for content distribution;
- Provides useful information of usage of digital content, performed by clients, which information can be used by content providers when deciding business models or as robust basis for statistics of downloaded and streamed digital content.

### BRIEF DESCRIPTION OF THE DRAWINGS

The invention together with further objects and advantages thereof, may best be understood by making reference to the following description taken together with the accompanying drawings, in which:
Fig. 1 is an overview of an example of a digital content ordering and distribution system incorporating the relevant parties and their mutual relationships;
Fig. 2 is a block diagram schematically illustrating an embodiment of a client system or module according to the present invention;
Fig. 3 is an overview of the digital content ordering and distribution system of Fig. 1, illustrating the relevant parties in more detail;
Fig. 4 is a block diagram schematically illustrating another embodiment of a client system according to the present invention;
Fig. 5 is a block diagram illustrating a logging agent according to the present invention with security operation functionality;
Fig. 6 is an overview of a log storing log entries with usage information of client-usage of digital content;
Fig. 7 is a block diagram schematically illustrating yet another embodiment of a client system or module according to the present invention;
Fig. 8 is a block diagram illustrating a tamper-resistant device comprising a logging agent according to the present invention;
Fig. 9 is a block diagram schematically illustrating a further embodiment of a client system according to the present invention;
Fig. 10 is a flow diagram illustrating the steps of a monitoring method according to the present invention;
Fig. 11 is a flow diagram illustrating the logging step of Fig. 10 in more detail;
Fig. 12 is a flow diagram illustrating the security-operation performing step of Fig. 10 in more detail;
Fig. 13 is a flow diagram illustrating additional steps of the monitoring method according to the invention; and
Fig. 14 is a flow diagram illustrating the steps of a digital rights management method according to the present invention.

### DETAILED DESCRIPTION

The present invention is generally applicable to digital rights management (DRM) used in a digital content ordering and distribution system. In such an ordering and distribution system, digital content or media is provided, directly or indirectly, from a content provider to a client over a network, e.g. Internet or a wireless network for mobile communication, managed by a network operator. In order to facilitate understanding of the invention, a brief discussion of the general functionalities of DRM follows. As was mentioned in the background section, DRM is used for protecting the copyright holders' assets in a digital content ordering and distribution system. In this system, DRM typically regards authentication and key management, usage rights management and charging. These DRM functionalities are implemented in DRM modules arranged in the relevant parties, i.e. for example in a client system or module, in a server of the network operator and in a media or content server of the content provider.

Starting with authentication and key management, authentication is used to identify the parties in the digital content ordering and distribution process. Techniques well known in the art, such as user authentication and digital signatures using cryptographic keys [1], may be employed for authentication. In addition, techniques for marking or stamping digital content so that it can be tracked during the delivery process and the subsequent usage may be used. Watermarking and fingerprinting are two techniques that usually are employed for content marking. The DRM modules in the system also transport, store and generate, in a secure way, cryptographic keys for use in the digital content ordering and distribution process. The keys are employed for cryptographically protecting messages, including the actual digital content, during the delivery over the network.

The DRM modules also perform usage rule management and enforcement. The ordered digital content is associated with a ticket, license or digital permit specifying the client's usage rules and rights of the obtained digital media. This form of management is about the digital content itself and deals with issues such as, who gets it, how it is delivered, how may it be used (rendered, saved, forwarded, copied, executed, deleted and/or modified), how many times may it be used, how long does the rights last, who gets paid, how much they get paid and how. Some or all of these issues are specified in the license or ticket, which may be delivered together with the digital content. In order to describe the usage rules, special languages called rights languages have been developed. Two of the most prevalent rights languages used today are extensible Rights Markup Language (XrML) and Open Digital Rights Language (ODRL). In the client's usage device, the DRM module is implemented to ensure that the usage, most often the rendering, follows what is described in the usage rules and to prevent repudiation of the digital content usage.

Finally, charging generally refers to the procedure of the actual payment for usage of the digital content. Several different techniques are used, such as credit card techniques for payment over Internet, payment through a subscription or debiting an account.

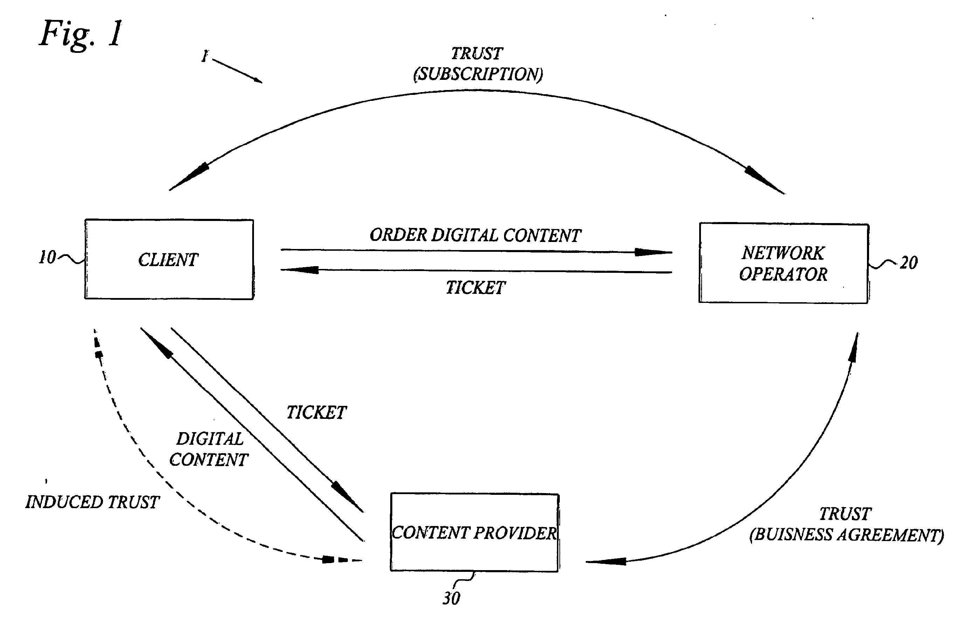

A digital content ordering and distribution system 1 incorporating DRM functionalities is schematically depicted in Fig. 1, which illustrates the relevant parties and their mutual relationships. The system 1 typically includes a client 10 having access to a network through an agreement, e.g. a subscription, with a network operator 20. This client-operator trust relation is usually manifested in a cryptographic relationship, i.e. sharing symmetric keys or use public keys, certified by a common trusted party, if asymmetric cryptography is used. A trust relationship is also present between the network operator 20 and a content provider 30, but in the form of a business agreement. This agreement could be manifested by a similar key sharing and/or key access as described for the client 10 and network operator 20 above. However, between the client 10 and the content provider 30, an induced trust relationship is established each time the client 10 obtains digital content from the content provider 30. This induced trust is manifested in a session key used for cryptographically protecting the digital content as it is transmitted to the client 10 over the network.

In a typical content ordering and distribution process, the client 10 firstly connects to the network operator 20. The operator 20 then authenticates the client 10 and possibly verifies that the client 10 has a valid DRM agent for managing DRM metadata, such as usage rules, encrypted data and keys, associated with the digital content. The client 10 chooses digital content or media and specifies some client-selectable usage rules to be valid for the media, for example rendering the media a selected number of times or during a given period of time. In the present description, digital content refers to digital data that can be downloaded or streamed over a network for usage in a client system or module, and thus includes for example audio, video, images, electronic books and other electronic text material as well as software.

An order is then placed to the operator 20, which writes and encrypts a ticket specifying the ordered content and the usage rules. The ticket is sent to the client 10, where the DRM agent decrypts the ticket and extracts a session key from the received ticket. The ticket can be decrypted by conventional cryptographic means, e.g. using a key of a symmetric or asymmetric key pair associated with the client 10 and the network operator 20. This decryption key is preferably the client-operator subscription key, a special DRM key associated with the DRM agent, or a key derived from any of these keys. The extracted session key will eventually be used for decrypting the digital media from the content provider 30. The client 10 also receives a copy of the ticket encrypted with the operator-content provider agreement key (or a key derived therefrom). This ticket copy is forwarded to the content provider 30, where the session key is extracted. Thereafter, the content provider 30 delivers the ordered digital content cryptographically protected by the session key to the client 10, either as downloaded data or streaming data. Finally, the DRM agent in the client 10 decrypts the digital content by the previously extracted session key. The digital content can be used, e.g. rendered, in the client module or an associated device according to the usage rules. Further information regarding DRM systems and ordering and distribution of digital content can be found in [2; 3].

The overall content ordering and distribution process discussed above is merely given as a simplified example for conveying a general image of such processes. In order to increase the security, more authentication and cryptographic steps may be introduced. In addition, the client should pay for the ordered content, so billing and charging steps are most often present in the ordering process. Such a charging may be performed by a subscription to the network operator, debiting an account of the client (user) with the network operator or content provider, by sending the user's credit card number to the network operator or a dedicated billing institute, managing the charging of digital content, or by some other means. In addition, the network operator may provide both the network and the digital content and hence acts as both operator and provider at the same time. However, the operator then typically has a dedicated content server and a dedicated operator server, so that the parties illustrated in Fig. 1 are present although the network operator also manages the content providing services.

The present invention is also applicable to other content (and license) ordering and distribution systems than the system of Fig. 1. For example, a system has been proposed where the digital content and license information is pre-packed by a content provider and then stored at a rights issuer. It is, thus, to this rights issuer the client is turning for purchase and retrieval of digital content and licenses. In such a system, an induced trust relationship is established directly between the client and the rights issuer, on behalf of the content provider. The content provider and rights issuer has previously established a business agreement, i.e. there is a trust relationship therebetween. Such an agreement may state which of the content provider's content the rights issuer is allowed to distribute to clients, under what conditions such distribution may take place, the prices for the content, any bundling constraints, what category of clients (users) the content may be delivered to, etc. Thus, in such a system, the content provider is not directly involved in the interaction with the client, i.e. does not authenticate clients nor manage transactions of payment and digital content from and to clients, respectively. Instead, such client interaction is delegated to the rights issuer. This separation in tasks is attractive both from a content provider's and rights issuer's point of view. The content provider gets a distribution channel for digital content without being directly involved. In a typical implementation, a network operator often fills the roll of the rights issuer. In such a case, the task separation may be very attractive for the network operator (rights issuer), allowing the operator to deliver content on customer basis and being able to offer interesting services and content. At the same time, the operator gets revenue from content services and not just the traditional transport services. The present invention can thus also be employed in such a content ordering and distribution system. Actually, the teaching of the present invention is not dependent on the actual system or mechanisms for content ordering and distribution and can thus be used in connection with any such system.

In some applications it is also possible that another client may act as a content provider. However, the usage rules are then preferably pushed to the content-receiving client from the network operator or the content provider.

An aspect of the present invention is generally directed towards preventing or deterring the user from repudiating usage of the ordered digital content according to the usage rules associated with the content or by trying to violate the rules. For example, the user may have been allowed, according to the license, to render a specific digital content twice, but disagrees with the DRM agent in the client system or module that two renderings actually have been performed. The present invention reduces this risk by monitoring the usage of the digital content and logging information concerning the usage individually for each usage to be monitored. The logged usage information is linked to the user/client, enabling an identification from which user/client the usage information originates. This linking is preferably obtained by performing a security operation, such as performing at least a part of authentication of the usage information, which is discussed in more detail below. By logging or recording information of client usage and establishing a connection or relation between the client and the information or otherwise associating the usage information with the client, the invention has a usage repudiation deterring effect on users, lowering the risk that users will violate usage rules of ordered digital content. The generated usage information can also be used if a disagreement between the user and the content provider (DRM agent) is present. By simply investigating the log, information about the actual number of usages performed by the client, when they were performed, the quality obtained during usage sessions (depending on what is included in the usage information) can be identified and retrieved, and used to resolve disputes.

In addiction, the logging of usage information according to the present invention can also be employed as a basis for charging ordered and provided digital content, in particular if post-payment is used. In such a case, the information in the log is used by the network operator, content provider or some billing institute to determine the amount to charge an account of the user for usage of the ordered digital content. This account could be a bank account of the user or a dedicated account of the user established with the network operator or the content provider. Also, an account associated with a credit card number of the user is chargeable according to the invention. In either case, the account is typically associated with an individual, which could be the person ordering and using digital content. Alternatively, the individual is a group of clients or users, including companies and other associations. By appropriately performing the security operation according to the invention it will be possible to enable identification of an account and linking the account to the logged usage information. In other words, due to the security operation it is possible to identify the logged usage information as being associated with an account, including user/client associated payment identifier, instead of, or in addition to, a client or an individual.

The security operation of the invention for enabling identification of an account or individual (client) by linking the logged usage information thereto can be performed in a number of different ways. Firstly, at least part of an authentication of the usage information can be performed by the client. This authentication could be a signing of the usage information using a private signing key of an asymmetric key pair, where the associated public verification key together with a certificate on the public key is certified by a trusted party, e.g. the network operator. Alternatively, an authentication tag based on symmetric keys can be appended to the logged usage information, allowing identification from whom the information is derived by involving a trusted third party knowing the symmetric key. The origin of the usage information could also, at least implicitly, be identified by encrypting or cryptographically protecting the usage information with a protected key. A copy of the key, together with or associated with information identifying an account or client/user, is stored at a trusted party. However, such an encryption basically only gives implicit authentication, relying on sufficient redundancy in the logged information. In any case, encryption might still be desirable e.g. to protect users' privacy, not revealing what content the user consumes.

Alternatively, the client could send the generated usage information to a trusted third party that performs the actual security operation.

Another possible security operation is to store the logged usage information in an environment that is inaccessible for the user, but associated thereto or to the client system. A typical example is the environment of a subscriber identity module (SIM). For activating the SIM environment the user typically enters a pin code or personal security code. However, although the environment is activated and the logging agent can store the logged usage information on this secure area, the user actually has no physical access thereto, i.e. is not able to modify or delete the log from the SIM. Since the SIM is issued by a (network) service provider and is associated with a service agreement (subscription) between the user and the service provider, it is, thus, subsequently possible to associate the SIM and consequently the log stored thereon with the user.

The above identified security operations are merely given as illustrative examples, and other operations that enables identification of the account and/or individual associated with the usage information is also within the scope of the invention as defined by the appended claims. For example security operations and non-repudiation methods, or variants thereof, mentioned in references [4-6] could be employed according to the invention.

It is anticipated by the invention that the actual person that uses the ordered digital content may be different from the individual ordering and paying for the digital content. However, from DRM point of views it is the actual ordering individual, or the actual payer, acknowledging the usage rules in the license or ticket associated with the digital content that is to be responsible to the content provider, if there is a disagreement or dispute about the usage of the digital content.

In the present invention, usage of provided digital content is directed towards methods of using the content by the client. This usage could include: rendering the content by the client, for example play audio or video, display images or text and/or print the digital content; saving the content on the client system or some other suitable media; forwarding the digital content, for example to another client or client system; making copies of the content; deleting the obtained content; executing the code elements of the digital content (being in form of software) and/or modifying the digital content. In a preferred application, the usage rights or rules of the relevant methods of usage are specified in the ticket and/or license associated with the digital content.

In the following, the embodiments of the present invention are described with usage of digital content in the form of rendering of the content. A client system then incorporates or is associated, e.g. directly or indirectly connected, with a rendering device or player for rendering the digital content. Furthermore, the security operation according to the invention for identifying the account or individual associated with the generated usage information is, in the following, exemplified as authentication of the usage information. However, as the skilled in the art understands, the invention is not limited to rendering and/or authentication embodiments, but comprise any other method of usage of the content by a client and any security operation allowing identification of the user/client, including the usage and security operations described above. In such a case, the rendering device is changed correspondingly to the relevant usage means, function or device, and the usage information authentication unit is changed accordingly. It is also possible to have a usage device that can perform some or all of the above uses, e.g. is able to both render, copy, save, delete and forward digital content. The client system can also, or instead, include several stand-alone usage devices, such as one rendering device, one forwarding device, etc.

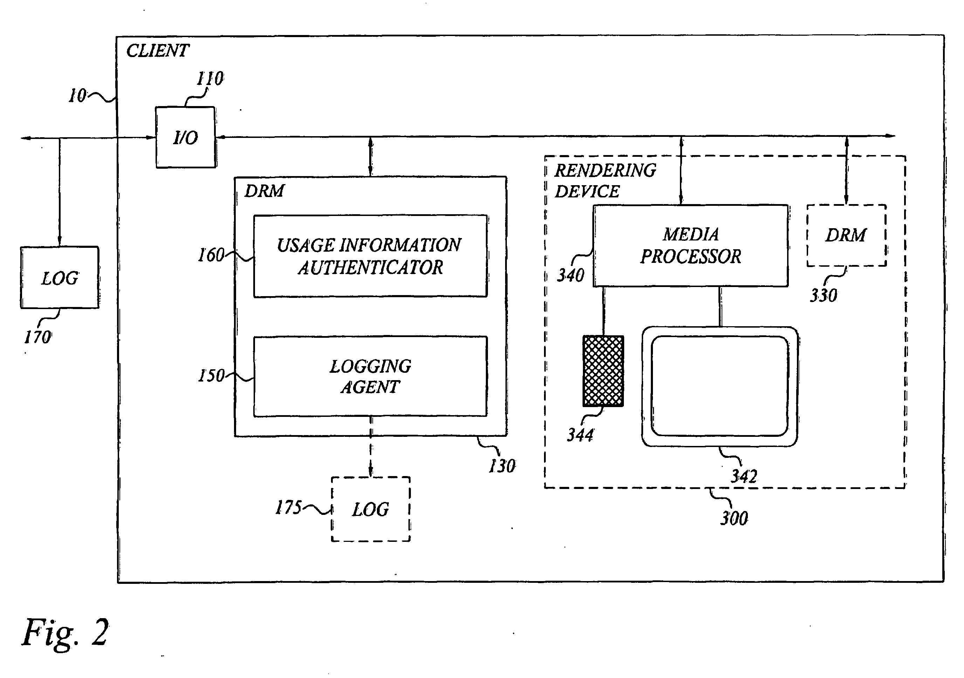

A client system or module 10 according to the present invention is illustrated in Fig. 2. The client module 10 can be any form of appliance, which may order and obtain digital content over a network, for example a personal computer (PC) or a mobile unit, including mobile telephones, personal digital assistants or communicators. The module 10 comprises an input/output (I/O) communication unit 110 for managing communication between the client module 10 and external units, including the content provider. Furthermore, the I/O unit 110 includes functionality for downloading or streaming the digital content from a content provider to the module 10, where a rendering device 300 or player renders the content. The rendering device 300 could be implemented in software, hardware or a combination thereof. Preferably, the rendering device 300 includes a media processor 340, which may be software-implemented, for rendering the digital content using e.g. a screen 342 and/or a loudspeaker 344, depending on the type of digital content. The rendering device 340 may be integrated into the mobile unit or PC 10, as is illustrated in Fig. 2, but can also be provided as a stand-alone device, directly or indirectly connected thereto.

The client module 10 is also provided with a DRM agent 130 for managing the DRM metadata associated with the digital content. This DRM agent 130 is implemented for decrypting digital content obtained from the content provider using session keys and enforcing rendering only according to usage rules. A portion of this DRM functionality 330 may be implemented in the rendering device 300, where the actual content rendering is performed. This rendering device associated DRM functionality 330 could be managing for example rule-enforcement and typically also decryption of the protected digital content prior to renderings thereof.

According to the present invention, a logging agent 150 is provided in the client module 10, preferably in the DRM agent 130, for monitoring usage, in this embodiment rendering, of the downloaded, broadcast or streamed digital content. This logging agent 150 generates and logs usage information concerning renderings of the digital content individually for each rendering to be monitored. An authentication unit 160 is also provided in the client module 10, such as in the DRM agent 130, for performing at least a part of authentication of the generated usage information from the logging agent 150. The authentication unit 160 preferably uses a key associated with the client module 10 and/or the DRM agent 130 for the authentication purposes. The authentication, such as signing, of the usage information with the key enables identification of the individual owning the client module 10, or otherwise is associated therewith. The authentication unit 160 can be configured for authenticating the usage information once it is generated by the logging agent 150. The generated and authenticated information is then sent to storing means for storing as a log entry in a log 170, 175. This usage log 170, 175 may be arranged locally in the client module 10 or externally. In the former case, the log 175 is preferably stored in such a way that it is hard for an attacker to modify or delete the usage information in the log 175. This could be accomplished by storing the log 175 in a tamper-resistant device, thereby being harder to access and modify. Another solution could be to store the log 175 somewhere in the client module 10, where it is hard to locate for an attacker, and/or using a format of the log 175, which gives no information or clue about its content. The locally stored log 175 may be arranged in the logging agent 150, in the DRM agent 130 and/or somewhere else in the client module 10. However, the usage information is preferably forwarded from the logging agent 150 and authentication unit 160 in the client module 10 to an external log 170 provided by a trusted party, e.g. in a network node. This trusted party could be the network operator or some other party, which the client and the content provider both trust.

Alternatively, the generated usage information from the logging agent 150 can, at least temporarily, be sent to the client local log 175 for storage therein, without first being authenticated. However, if the usage information subsequently is to be transmitted to the external log 170 at (a network node of) the trusted party, it is preferably first authenticated by the authentication unit 160 prior to transmission.

If the usage information is sent to the external log 170, the information may be forwarded as it is generated and authenticated. Usage information may instead be stored temporarily in the logging agent 150 or the local log 175 and then forwarded intermittently to the external log 170. The information could also be sent once all renderings associated with a digital content have been consumed, i.e. when the number of renderings specified in the usage rules have been consumed or when the allowed rendering time has elapsed. In addition, the generated usage information may be sent upon a request from the content provider and/or the network operator. The generated and authenticated usage information may initially be stored in the local log 175 and is only transmitted to the external log 170, when the memory of the client log 175 is full, or almost full.

Two logs 170,175 may also be used, one local log 175 stored in the client module 10 and one external log 170 stored at the trusted party.

The logging agent 150 and/or the authentication unit 160 can be implemented in the client module 10 in software, hardware or a combination thereof. The client module 10 may be pre-manufactured with the logging agent 150, or the logging agent 150 can be downloaded over the network from e.g. the network operator and implemented in the client module 10, which is discussed in more detail below.

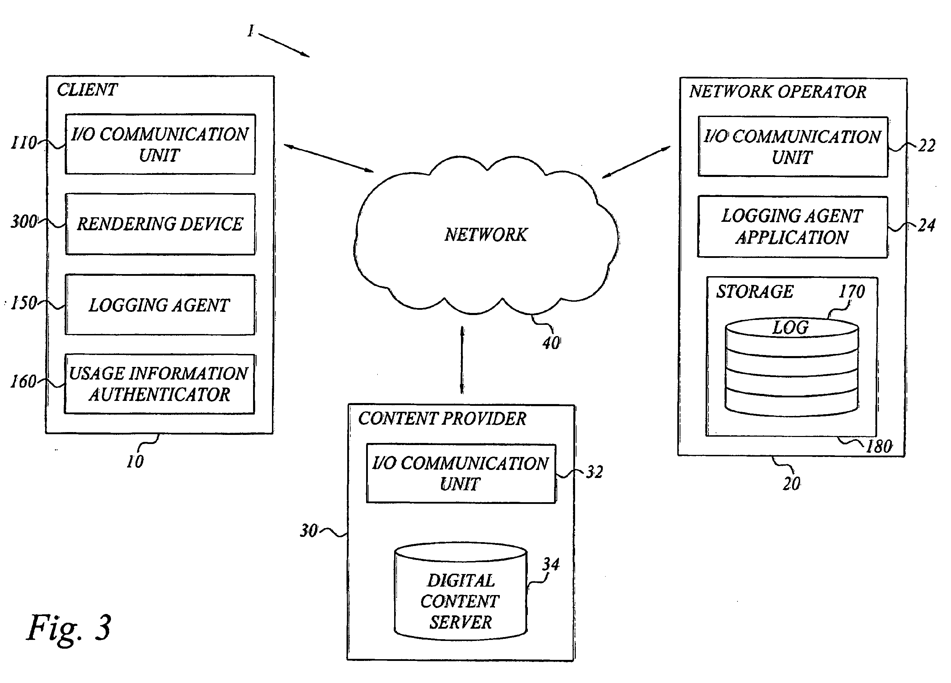

Fig. 3 schematically illustrated the ordering and distribution system 1 of Fig. 1 and the relevant parties in more detail. The client system or module 10 comprises, as was discussed above, an input/output communication unit 110 for downloading or streaming digital content from a content provider 30 over a network 40 managed by a network operator 20. The content provider 30 includes a server 34 or database with digital content to be provided to clients. Correspondingly to the client system 10, the content provider 30 comprises means 32 for downloading, broadcasting or streaming the content to the client, where it is rendered by a rendering device 300. Usage information concerning the rendering is generated in a logging agent 150 and authenticated 160 before being transmitted to an external party. This external party is represented in Fig. 3 by the network operator 20, which receives, by means of its associated input/output communication unit 22, the authenticated usage information and stores it as a log entry in a usage log 170 provided in a storage location 180.

As was mentioned in the foregoing, the rendering device may be integrated into the client module, i.e. for example personal computer (PC) or mobile unit. However, the client system can alternatively comprise two separate units, one unit for performing the reception (e.g. downloading or streaming) of digital content and one unit that actually renders the digital content, i.e. the rendering device. In such a case, the receiving unit is physically separated from the stand-alone unit that actually renders the digital content. This stand-alone rendering device is however directly (via suitable communication port) or indirectly connected to the receiving unit. The receiving unit may e.g. be a PC or mobile unit with suitable hardware/software for receiving the digital content. The content is then preferably transmitted to the rendering device via ordinary cables or by wireless communication with or without involving a network. Alternatively, the PC or mobile unit can store the received digital content in or on some suitable portable media, including floppy disks, hard disks, MD disks, CD-ROM disks DVD disks, compact flash cards, smart cards, etc. The user may then move the portable media with the digital content to the rendering device for rendering the content Typical stand-alone rendering devices include Mp3 players, MD players, CD players, DVD players, other mobile units or PCs.

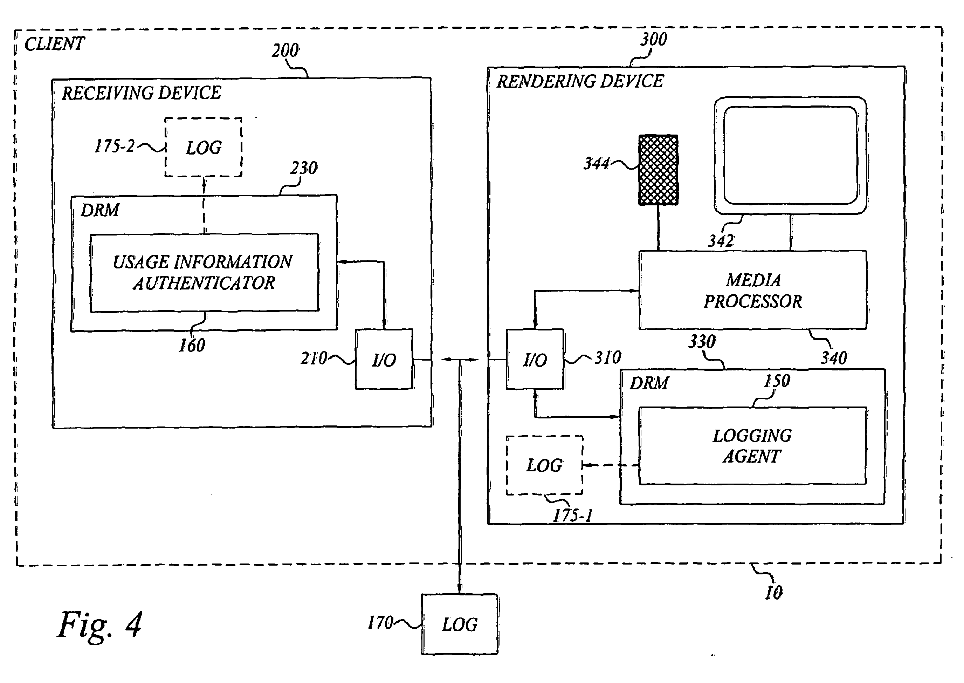

Referring to Fig. 4, the client system 10 comprises a receiving device 200 for downloading and/or streaming digital content from a content provider, and/or providing the content as broadcasted data. In addition, a stand-alone rendering device 300 including media processor 340 and user interacting means, e.g. screen 342 and/or loudspeaker 344, is provided in the client system 10. The receiving device 200 includes an input/output (I/O) communication unit 210 for managing communication on one hand with the content provider over a network, e.g. download or stream digital content therefrom, and for providing the received digital content to the rendering device 300. The I/O unit 210 may transmit the digital content through a cable to a corresponding I/O unit 310 in the rendering device 300. Alternatively, the content could be transmitted over a network to the I/O unit 310 or recorded on a suitable media and then manually transferred to the rendering device 300, where the I/O unit 310 reads the digital content. Furthermore, a DRM agent 230 is preferably arranged in the receiving device 200 for managing the DRM metadata associated with the digital content.

The rendering device 300 in Fig. 4 is likewise provided with a DRM agent 330 managing decryption of the digital content and enforcing the associated usage rules. In the present embodiment, a logging agent 150 according to the present invention is implemented in the rendering device 300, preferably in the DRM agent 330 of the rendering device 300. This logging agent 150 generates usage information concerning renderings of the digital content individually. The generated usage information may then be stored as a log entry in a usage log 175-1 provided in the rendering device 300. In such a case, the usage information may be stored without first being authenticated. Alternatively, or in addition, the usage information is transmitted to the receiving device 200 using the I/O units 210 and 310, respectively. Once received, the usage information can be stored in a local log 175-2. However, the usage information is preferably authenticated using an authentication unit 160 implemented in the receiving device 200, such as in the associated DRM agent 230. The now authenticated usage information may be stored in the log 175-2 and/or transmitted to a trusted party for storing in an external log 170.

Although, the authentication unit 160 is implemented in the receiving device 200 of the client system 10 in Fig. 4, it is anticipated by the invention to instead implement the authentication unit 160, or in addition implement a corresponding authentication unit, in the rendering device 300, preferably in the DRM agent 330 of the rendering device 300. In such a case, the usage information from the logging agent 150 can be authenticated in connection with generation thereof.

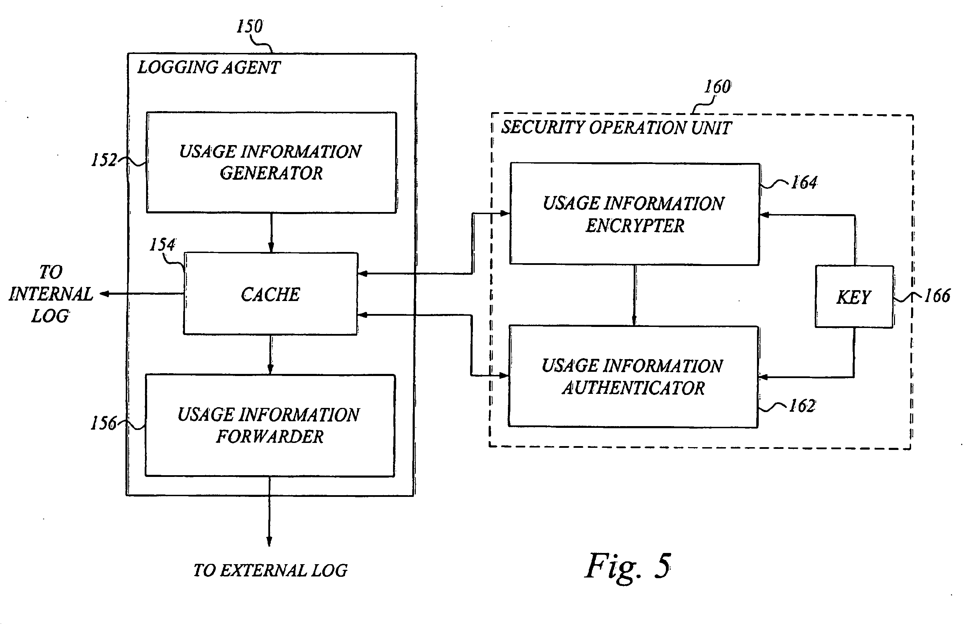

A typical implementation of a logging agent 150 and a security operation unit 160, illustrating their including elements, are shown in Fig. 5. The logging agent 150 comprises a generator 152 for generating usage information concerning usage of digital content individually for each usage. This generator 152 receives input data from different external means, depending on which usage information to be generated and logged. In a typical case, the generator 152 receives the input data from e.g. the usage means, or more precisely from the DRM agent managing the usage of the digital content, the license or ticket associated with the received digital content, etc. From this input, the information generator 152 creates relevant usage information, more of which below, and stores it temporarily in a cache 154 or similar temporary memory.

The usage information is then preferably forwarded, preferably in a secure manner, e.g. by using encryption/authentication or a secure channel, to the security operation unit 160 for being connected or associated with an account or individual, typically the owner of the client system or the subscriber to the network operator, allowing identification from whom the usage information originates.

In this embodiment, an encryption engine 164 for cryptographically preventing unauthorized access to the generated usage information from the logging agent 150 is provided in the security operation unit 160. This encryption engine 164 is arranged for encrypting the usage information using an encryption key 166. The encryption key 166 may be a shared symmetric key, a copy of which is stored at a trusted party, e.g. the network operator, content provider or some other trusted party. Alternatively, an asymmetric key pair may be used for encrypting the usage information encryption. The security operation unit 160 then comprises a public key 166 of a trusted party together witch a certificate on the public key. The encrypted usage information can then only be read by the trusted party using its private key for decryption of the cryptographically protected information.

In addition to cryptographically protecting the generated usage information from the logging agent 150, the usage information may also be authenticated allowing identification from whom the information is derived. Thus, an authenticating unit 162 for authenticating the usage information is provided in the security operation unit 160. The authenticating unit 162 may append an authentication tag to the usage information. The tag could be a digital signature added to the information using a private signing key 166 of an asymmetric key pair. The associated public verification key together with a certificate on the public key is stored at a trusted party. Also message authentication, e.g. using symmetric keys 166, may be used to authenticate and identify the origin of the usage information.

One way to do this log authentication of the usage information according to the invention is by letting the DRM agent in the client system display a request on the user interface of the client system when the usage device associated with the client system has used the digital content. This request urges the user (or possible the client itself) to confirm that a usage has been performed. In this case, in order to avoid the situation of getting no response at all, the DRM agent may be implemented to prohibit further usage of the digital content until a response, whether positive or negative, to the authentication request is given. If a positive response is given, the usage information is authenticated and stored as a log entry in the usage log. However, a negative response, i.e. the user does not accept the usage as being successfully performed nor that usage information should be entered in the log, may initiate different activities of the DRM agent. The strategy for the DRM agent to follow could be fixed or could be specified in the license or ticket associated with the digital content. In the latter case, the content provider has the possibility to adjust the strategy to match the content and client system properties. For example, for low value digital content, one or more extra usages could be acceptable for a negative logging authentication response, while for a high value digital content the DRM agent sends an automatic message to the content provider, for the content provider to resolve the issue. Thus, in case this strategy is part of the license or ticket, the strategy will have to be protected from being accessible to the user, as he/she otherwise could adopt his/her response strategy accordingly, e.g. always respond negatively and thereby obtain extra (free of charge) usages if such strategy is employed. Encryption of the strategy containing part of the license could give this protection.

The generated usage information from the logging agent 150, may, thus, be encrypted, authenticated or encrypted and authenticated. The key(s) used for cryptographically protecting and/or authenticating the usage information could be subscription key(s) associated with a subscription between the client and the network operator, or key(s) derived therefrom. For example, the client may have a network subscription identification module, issued by the network operator, arranged in the client system. This network subscription identification module in turn comprises a key used for authenticating the client to the operator. Such a subscription key could also be used for cryptographic protection and/or authentication of usage information. Specific keys associated with the DRM agent in the client system and used in the DRM system can also be used for encryption and/or authentication purposes regarding the usage information. In addition, specific keys associated with the client system as such, including device keys, can be used for encryption and/or authentication of the digital content. Also, subscription associated usernames and passwords may be used in this context. If the client has one, or several IP addresses associated thereto, such address(es) can, in some cases also, be used for information authentication.

The generated and possibly encrypted/authenticated or encrypted and authenticated usage information is then sent from the temporary cache memory 154 either to a log stored in the client system or through a forwarder 156 adapted for forwarding usage information to an external log at a trusted party.

Although the security operation unit 160 in Fig. 5 has been illustrated as a stand-alone unit connected to the logging agent 150, its functionality, in particular the authentication functionality of the security operation unit 160, could be implemented in the logging agent 150. In case of a distributed implementation, i.e. stand-alone security operation unit 160, the communication between the unit 160 and the logging agent 150 is preferably secured.

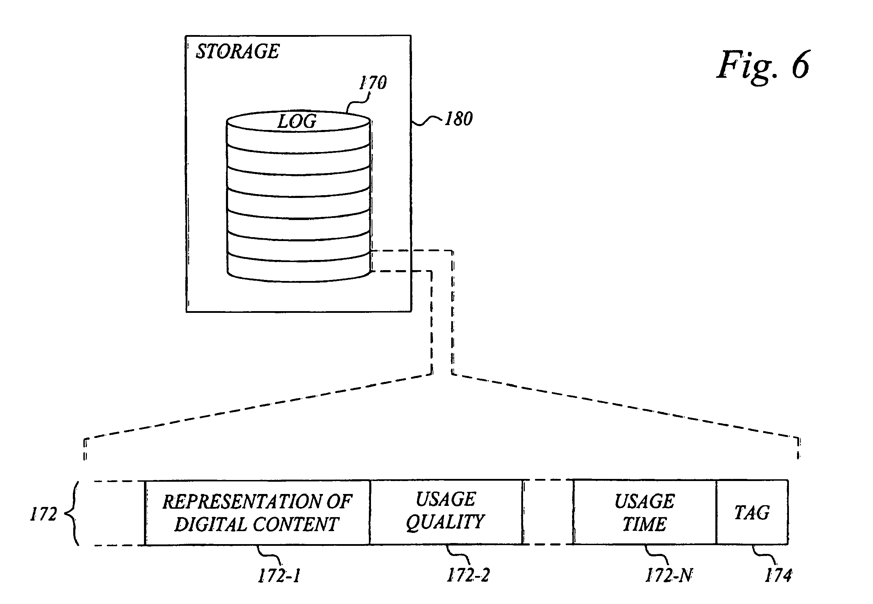

Fig. 6 illustrates a log 170 and examples of usage information that can be found in a log entry 172. As was mentioned in the foregoing, the log 170 is stored either locally in the client system or module and/or externally at a trusted party in some storage means 180 or memory. If stored at a trusted party, each log 170 may be associated with a specific client, containing only usage informations from that client. It may, however, be possible to store usage information from several different clients in one log 170. The information is then authenticated, identifying from which client the information is derived.

The log entries 172 in the log 170 comprise usage information associated with usage, e.g. renderings, of digital content by a client system. The usage information may include a representation 172-1 or description of the used digital content, e.g. a fingerprint identifying the content or the file name associated with the content. Typically fingerprints could be the content itself, a copy or portion thereof. Also a hash function value of the digital content or a portion thereof can be used to get a content representation. Another possible content representation is a URI (Universal Resource Identifier) or URL (Uniform Resource Locator), which specifies the address (and possible the name of the content) of the digital content, e.g. the address in the content provider's server, from which the content can be fetched.

The usage information could also comprise information concerning the quality 172-2 of the content or usage of the content. This form of information can be used to check if the usage has been performed according to the usage quality specified in the usage rules of the license, i.e. the usage should have the quality the client actually has paid for. Different quantities can be used to define and express rendering quality. Typical examples are the bandwidth or the resolution of the digital content. Also the sample rate of the digital content, the data compression rate, etc. can be used as a quality quantity. The digital content itself, or a representation thereof, could also constitute a quality quantity. For example, if the client orders and receives digital content specifying the share price of a company, for the purpose of acquiring stocks in that company, it is very important that the received content (share price) is correct and updated. In such a case, the content, a representation thereof and/or the time of reception of the content can be included as usage quality in the usage information. If the client subsequently claims that he/she has received an incorrect or heavily delayed share price, the content provider can simply retrieve the share price, obtained by the client, from the log. Also, information of any disruptions occurring during the usage of the digital content is a quality quantity according to the invention. This disruption information could state how many disruptions there were during the usage, when the disruptions occurred, for how long the disruptions lasted, etc.

Also information about usage quantity may be entered in the usage information. Such quantity could specify how many usages of the digital content that have been performed by the client and/or how many usages remain according to the usage rules.

The form of usage, i.e. identifying which type of usage that is performed, including rendering, forwarding, copying, executing, modifying, deleting, etc, may be found in the usage information.

The usage information preferably comprises information about the usage time 172-N. Such time preferably specifies the time when the usage is completed, but could also or instead specify the start time of the download or reception of the content, the start time of the usage or some other time, during which the usage is ongoing. In particular for rendering applications, but also for other methods of usage, the total time that the usage (rendering) has carried on or proceeded could constitute valuable usage information and can therefore be entered in the log. This total usage time is easily measured or estimated using the DRM agent, enabling usage of the digital content in the client system.

In addition, the usage information according to the present invention is well adapted for use with location-based service. Such services are provided by e.g. network operators, which then also acts as content providers. Typically location-based service includes finding the nearest pub, restaurant, cinema, cash point, hospital, police station, etc. Also the current distance and/or direction to the relevant requested location could be given. In such applications, the usage information may include a representation of the location of the client when ordering the location-based service, possibly together with the received digital content (direction, distance). It should be noted that location-based services might conflict with the users' privacy interest and it preferably should be possible for the user to give consent to the inclusion of location data in the usage information.

For games and other similar software digital content, the score or level obtained by the user when he/she renders the game can be included in the usage information. This may be especially important in situations where the client, according to the usage rule, is allowed to render the game a fixed number of times, but obtains one or several additional free renderings if the user achieves a certain score or level associated with the game. This game score or level is then preferably entered in the usage log. The present invention is especially attractive for use in combination with games associated with a price award.

Furthermore, the entry in the usage log could comprise a record of information about the DRM agent implemented in the client system. Such DRM record preferably gives information that, and possible how, the DRM agent is involved in the usage of the digital content. Typical DRM relevant information could be a version number, representation of a key associated with the DRM agent, or a key derived therefrom. From the DRM information it is then possible to control and verify that the client system really includes a correct and certified DRM agent. Thus, the usage information can provide a valuable source for continuously controlling clients' DRM agents to detect any security flaws as early as possible.

As was briefly discussed in connection to Fig. 1, when a client orders digital content, he typically receives a ticket comprising session keys used to decrypt the actual digital content. Information associated with the ticket, such as the ticket itself, a hash function value of the ticket or an identification code or number of the ticket may be included in the usage information. In addition, once the client has received the ticket it is possible that the user wishes to give away one or several of the usages of the digital content specified in the ticket to a friend. In such a case, the client either transmits the ticket to the friend's client system, or generates a new ticket, which is signed and transmitted to the friend, e.g. as a SMS (Short Message Service), MMS (Multimedia Messaging Service) or email. Furthermore, the client's ticket is updated accordingly, i.e. subtracting the usages forwarded to the friend from the total number of usages specified in the original ticket. The usage information preferably then includes an identifier of the friend receiving the usages and information of the usages given away, e.g. how many usages, what type of usages. A corresponding log of the friend's client system then includes an identifier of the client from whom he received the ticket or license.

When the content provided is to transmit the digital content to a client it can include time information in the transmittal of the content. Such time information states or enables identification of a time when transmission of the digital content was started or ended. In addition, the content provider preferably stores the transmission time in a data base or register or provides it to a third party for storage therein. This information could be a time-marked number, sequence or another time stamp. The sequence can be generated using a function or algorithm with the transmittal time as input. Additional inputs, can be an identifier of the client receiving the digital content, including version number, representation of a key associated with the client, and an identifier of the digital content. Once, received the time information is included in the usage information. This time-marked information can be used to investigate whether the user has manipulated the usage information. Once the logged usage information is provided to the content provider, or a trusted party, the time of transmission of the digital content is extracted or otherwise calculated from the time-marked information. The content provider (or third party) then compares this extracted time information with the stored counterpart, discussed above. If it is concluded that this extracted transmittal time is different from the actual transmittal time as stored at the content provided, then the user probably has manipulated the usage information.

Further useful usage information according to the invention is an identifier of the payment of the digital content. Such an identifier could state that the user already has paid for the digital content (pre-payment) or that the user is to pay for the content (post-payment). Such payment identifiers could be the identifier of the ticket associated with the digital content but also other identifiers, such as an account of the user, credit card number (possibly cryptographically protected), or payment transaction identifier, can be used. This payment information may then be obtained from the DRM agent as a part of the charging mechanism of the DRM functionality.

Also some information associated with the usage device, including an identifier code/version or number of the usage device can be included in the usage information. Such usage device information includes an associated device key, or a key derived therefrom. This information can be used to later verify that the usage of the ordered digital content actually has been performed with an approved usage device.

The ticket that is received prior downloading or streaming the digital content typically includes a SDP (Session Description Protocol), or other streaming set-up protocol, e.g. RTSP (Real-Time Streaming Protocol), SMIL (Synchronized Multimedia Integration Language), etc., description. Such a SDP description is a textual description for describing the content providing session and identifies, among others, URI specifying the address of the digital content, address information of the client (email address, International Mobile Subscriber Identity (IMSI), Mobile Station International Integrated Services Digital Network Number (MSISDN) or phone number), connection information, bandwidth information and (possibly protected) encryption key(s). This SDP description generally specifies what the user actually has paid for and can later be used to compare with what actually has been received/used. For example, SDP could specify the paid quality, e.g. bandwidth or sample rate, of the digital content. If the actual quality is also stored in the usage quality field 172-2 of the usage information, it is possible to later verify whether the actual bandwidth corresponded to what the user has paid for. Thus, the SDP description, a portion thereof or a hash function of the description or a portion thereof, is preferably included in the usage information.

The log entries can also comprise other information concerning usage of digital content, such as specifying how the client has used the usage rights associated with the digital content and how many and which usages of the content that remains according to the usage rules.

In some applications it could be possible for the user of the client system or module to specify some of the information to be included in the log. For example, the user could enter the credit card number or account number or identifier to be charged for usage of the digital content. Furthermore, if the user has received one or more tickets that can be used for charging usage of ordered content, the client system could list any such available charging tickets. The user can then select one or several tickets for payment of the content and their corresponding identifiers are then entered as usage information in the log.

It could also be possible for the client system, via a user interface, to present a summary or overview of the logged usage information, or a portion thereof, for the user. Furthermore, the client system could be implemented to display a request on the user interface. Such request then urges the user to confirm the logged usage information: Similar consequences as were discussed above in connection with log authentication could be employed if the user does not confirm the logged usage information.

The usage information can include all or some of the elements discussed above, or some other information associated with content usage.

As was mentioned above, the usage information is preferably authenticated, allowing identification of the client or user, especially when the log is stored externally. In a typical implementation, an authentication tag 174 can be appended to the usage information, as is illustrated in Fig. 6. This authentication tag 174 may be e.g. a digital signature or a message authentication code, computed by the client specific key discussed in connection to Fig. 5. Instead of, or as a complement to, using a dedicated authentication tag 174, the whole usage information may be authenticated and/or encrypted using an encryption and signing key, both cryptographically protecting and authenticating (in case of encryption only, the authentication is implicit) the usage information. If the log is stored locally in the client system, the need for an authentication tag or some other form of identifying information could be somewhat relaxed.

The logging agent arranged in the client system could be implemented for generating usage information individually for each usage of digital content that is performed by the client. In such a situation, each usage is monitored and information thereof is logged and can be retrieved later for resolving disagreements of the user and content provider. However, instead of monitoring and logging each usage, the logging agent can be configured to monitor and log usage information for randomly selected usages. The logging could also be performed intermittently for the usages, e.g. every second usage. The most important issue here is that monitoring and logging of usage of digital content should deter the user from repudiating usage of the content. By logging information intermittently or randomly, the user is not aware of which usage that is logged and therefore is deterred to repudiate the usage rules. If not every usage is logged, the user preferably should not be allowed to know which usage that actually is logged and which is not. In addition, the strategy used for logging usage information, for example which usage actually should be logged and/or when it should be logged, can be specified in the license or ticket associated with the received digital content.

However, if the logged usage information is used as a basis for charging, usage information concerning each usage is preferably generated, authenticated and provided to the charging institute.

Usage information originating from clients can of course provide a high value source of information about the actual usage of digital content. Such information may have a potential high value for content providers, when deciding business models, price of digital content, etc. Since usage information from several clients may be stored together in one or several logs at a trusted party, the content provider can then access the logs and use the information stored therein as a statistical information source in the provider's work. In such a case, the information used for statistics gathering is first preferably "depersonalized" to protect the users' privacy.

If the digital content is provided as streaming data, the content provider is on-line, communicating with the client's rendering device during the rendering. In this "on-the-fly" rendering, the transport of the content is typically made with an unreliable protocol, such as UDP (User Datagram Protocol) [7]. Streaming data include digital content being rendered in real time as it is received over a network. The data can also, at least temporarily, have been buffered before the actual rendering takes place, which is well known to a person skilled in the art. The monitoring of renderings and logging of information thereof are in this case preferably made during the actual rendering. Thus, during rendering of digital content, the logging agent in the client system intermittently generates information concerning the ongoing rendering. For example, the logging agent could be implemented to generate usage information every 30 seconds, every second minute or some other time interval, periodically or not. The generated usage information is then stored in a usage log, as discussed above. However, the usage information may preferably also be sent, typically after being authenticated, to the content provider for confirming reception and rendering of the streaming data. The content provider may be equipped with a DRM functionality that receives this client usage information and only continues to stream data if usage information is received within a predetermined period of time. Thus, the content provider could terminate the streaming flow of digital content if no information is sent from the client during the predetermined period of time.

In some streaming applications, the content provider intermittently sends transmittal reports to the client. These reports may include information of the hitherto delivered digital content. Such information may be the amount of data packages sent to the client and/or the quality of the delivered content. When the client receives these transmittal reports, the user could respond by sending a receive report, e.g. confirming, accepting or rejecting that what is included in the information actually has been fulfilled, e.g. that the specified number of data packages actually have been received with the correct content quality. The logging agent can then be implemented to include the generated usage information in the receive reports. If no usage information is received by the content provider together with the receive reports, the streaming flow of digital content could be terminated, as in above.

Instead of, or as a complement to, terminating the stream flow of data, the logging agent could include a notification in the usage information that the user refuses transmission of, or has not sent, the usage information together with the receive reports to the content provider.

In addition, protocols used specifically for streaming digital data, such as the Real-Time Transport Protocol (RTP) and the Secure Real-Time Transport Protocol (SRTP), typically have a report mechanism, where the receiver of streaming data, i.e. the client, intermittently or periodically sends a receive report of the accompanying RTP protocol to the transmitter of the data, i.e. the content provider [8, 9]. The usage information generated by the logging agent can then be included in and sent together with the receive reports to the content provider. In addition, SRTP provides a general framework for cryptographically protecting the reports. This SRTP encryption could be used also for protecting the usage information as it is sent over the network. In SRTP it is also mandatory to authenticate the feedback reports, and this authentication could be extended by e.g. digital signatures for logging purposes.

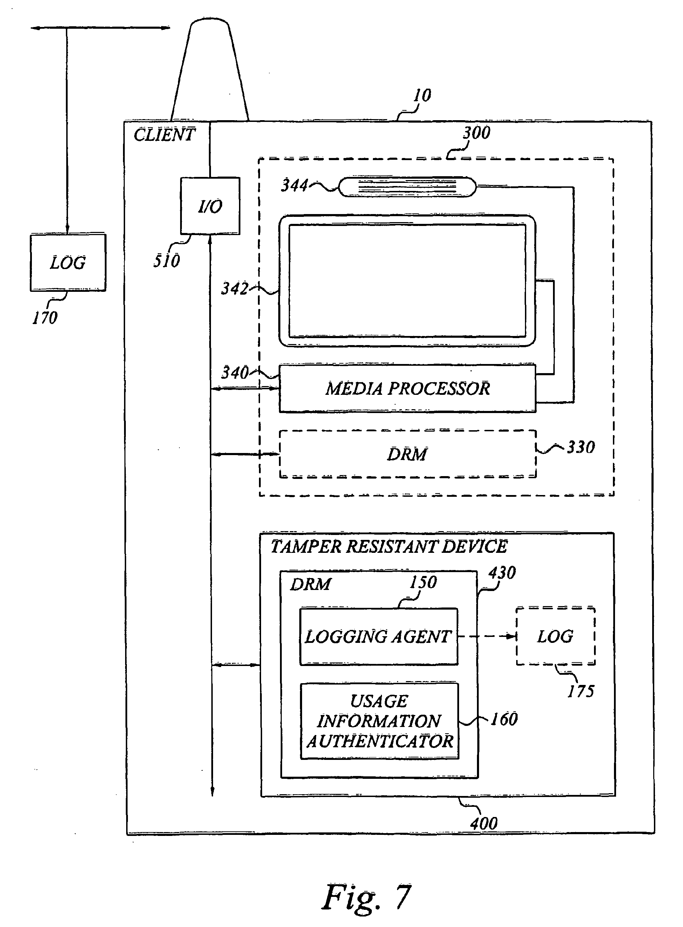

In order to increase the security of the logging functionality in the client system, the logging agent may be implemented in a tamper-resistant device, see Fig. 7. Such a device makes it much harder for an attacker to access and modify the logging agent and thereby modify the generated usage information. Also, the usage log can be stored in the tamper-resistant device, thereby preventing easy access, modification and deletion by the user thereof. The tamper-resistant device is preferably portable and removably arranged in the client system or module. Such a device can then be moved between and used in connection with different client modules. In such a case, the client module preferably includes means for receiving and storing a license associated with received digital content. In addition, an appender for appending the usage log to the license is preferably arranged in the client module. This appender appends the log to the license so that when the tamper-resistant module is moved to another client module, both the license and the log accompany the device to the new client module. However, the appender preferably should leave the license unchanged except appending the log thereto.

Fig. 7 illustrates an embodiment of a client module 10 incorporating an input/output (I/O) communication unit 510, a rendering device 300 and a tamper-resistant device 400. The I/O unit 110 typically implements a network communication protocol stack, thus enables downloading or streaming of digital content from a content provider. As for the embodiments above, the rendering device 300 comprises a media processor 340, screen 342 and/or loudspeaker 344 for rendering digital content and, preferably, a DRM agent 330. A DRM agent 430 is also preferably arranged in the tamper-resistant device 400. In such a case, the logging agent 150 can be implemented in the DRM agent 430 associated with the tamper-resistant device 400. An authentication unit 160 for authenticating the usage information from the logging agent 150 is provided in the client module 10, preferably in the tamper resistant device 400 or in its DRM agent 430.

The embodiment of the client module 10 in Fig. 7, could be a mobile unit, e.g. a mobile telephone. This offers an advantage compared to if the logging agent of the invention is arranged in a computer. This advantage is manifested in a potentially increased security against hacking, due to that the operating system platforms of computer, e.g. Windows and Linux, are much more well known by the public than corresponding platforms of mobile units, which thereby becomes harder to attack and modify. Therefore, a logging agent according to the present invention is well suited for implementation in a mobile unit.

A particularly attractive solution is when the logging agent is implemented in a tamper-resistant device issued by a party trusted both by the client and the content provider. This trusted party could for example be the network operator, having a contractual agreement with the content provider to provide its subscribers with client modules. Such an operator provided tamper-resistant device could be and identity module, including network subscriber identity modules (SIM). This network SIM can be a smart card read by a card reader connected to the client module. Another solution is to use standard SIM cards used in GSM (Global System for Mobile Communication) mobile units or any other network SIM known to the art, including also UMTS (Universal Mobile Telecommunications System) SIM (USIM), WIM (Wireless Identity Module) ISIM (Internet Multimedia Services Identity Module), and more generally UICC (Universal Integrated Circuit Card) modules. However, also other also other cards having similar functionalities as standard SIM cards, e.g. smart cards used for banking transactions, could be provided with a logging agent according to the present invention. For example, the tamper-resistant identity module may be a smart card associated with a set-top box for satellite TV or a tamper-resistant identity module for a general digital home entertainment center.

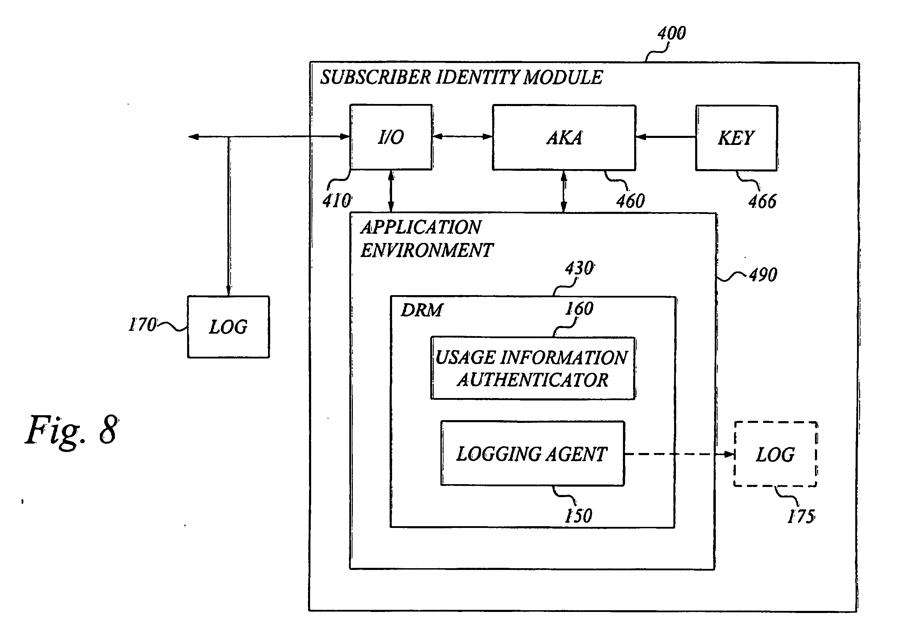

Fig. 8 illustrates a tamper-resistant device 400 in form of a network subscriber identity module incorporating a logging agent 150 of the invention. The SIM 400 of Fig. 8 is also provided with an Authentication and Key Agreement (AKA) module 460, comprising algorithms, e.g. the GSM A3/A8 AKA algorithms, for operating on data sent/received by the mobile unit, thereby authenticating the client in the network. These AKA algorithms typically uses a SIM specific key 466, e.g. the subscription key associated with the user-operator subscription, a key associated with a DRM agent 430 implemented in the SIM, or a key derived from these keys. It is also possible to use asymmetric cryptography for authentication purposes. The SIM 400 could also comprise a usage information authenticator 160 for performing the security operation (authentication) of the invention. Alternatively, or as complement, it might be possible to configure the algorithms of the AKA module 460 for cryptographically protecting and/or authenticating the usage information generated by the logging agent 150 in the mobile unit. The SIM 400 is also provided with a conventional input/output unit 410 that parses commands sent to the SIM 400 and handles communication with the internal functions. For more information on SIM modules, reference is made to [10,11]

The logging agent 150 can be implemented in the SIM 400 in software, hardware or a combination thereof. The client module, or the SIM 400, could be provided with the logging agent 150 at or during manufacturing. Instead of using client module or SIM 400 pre-fabricated with a logging agent 150, the logging agent 150 can be downloaded over the network from a network node associated with e.g. the network operator or the content provider, and be implemented in the client module or SIM 400. This downloading solution is especially advantageous for implementing the logging agent 150 on the SIM 400. As the SIM - mobile unit interface typically is associated with commands intended to send more or less arbitrary data to the SIM 400 for use therein, e.g. the "ENVELOPE" command for GSM SIM cards, the code for implementing the logging agent 150 on the SIM 400, e.g. as a general Java Applet application, could be sent using such commands. The applet can be given various degrees of authorization to access resident GSM/UMTS-related files, one possibility being to give it "full GSM/UMTS access". The logging agent application sent by the command is implemented in an application environment 490 provided by an application toolkit associated with the SIM 400. For a GSM SIM the application environment is provided by SIM Application Toolkit (SAT), whereas the analogue of USIM is provided by UMTS SAT (USAT). Thus, the SIM application toolkit enables the manufacturer, operator or content provider to either "hardcode" (manufacturer), or download (operator or content provider, via the network operator), over the air, a logging agent application into the SIM 400. If the logging agent 150 is downloaded to the SIM application environment 490, it is preferred to authenticate the application (logging agent) as coming from the right operator. Thus, this gives protection against downloading "viruses" or incorrect logging agents form a malicious server. The downloaded logging application can also be encrypted, e.g. with a SIM associated key, so that the content thereof is not available outside the SIM. Further information of SAT and USAT is found in reference [12-14] and [15], respectively.

If using a tamper-resistant device or SIM card, other than standard SIM cards for mobile communication, its corresponding download commands and application environment can be used for implementing a logging agent application therein.

Using an application environment implemented solution for the logging agent 150, or a similar implementation solution, it is possible to upgrade the functions of the logging agent 150. This upgrade may e.g. concern a new storage location of the usage log 170, 175, new information included in the logging entries, etc. Such upgrades are then simply downloaded using download commands, e.g. the ENVELOPE command, associated with the client module and implemented in the client module. This is an advantageous solution if the logging agent 150 is broken or "hacked", so that its code and/or secret keys become publicly known, e.g. on the Internet. Then, instead of changing all logging agent containing client modules or tamper-resistant devices, including network SIM cards 400, the logging agent 150 can simple be updated by downloading and implementing new upgrades, e.g. new keys.

As is illustrated in Fig. 8, not only the logging agent 150 but also the DRM agent 430 can be implemented in the application environment 490. This means that also other DRM functions and applications can be upgraded through downloading.

Referring to Fig. 3, the network operator 20 can include logging agent applications 24 to be downloaded to its subscribing clients 10. Such applications 24 could also include upgrading of the logging agent which are transmitted by means of the I/O communication unit 22 over the network 40 to the client module 10 for implementation therein.

Returning anew to Fig. 8, the logging agent 150 in the application environment generates the usage information and the generated usage information is preferably authenticated using e.g. the authenticator 160 or the AKA module 460 with the SIM associated key 466. The authenticated usage information is then stored in a usage log 170, 175. This log could, as was discussed above, be stored externally (reference number 170 in Fig. 8) at a trusted party, on the SIM 400 (reference number 175 in Fig. 8) and/or in the client module cooperating with the SIM 400. On the SIM 400 of Fig. 8, the log 175 may be arranged in the application environment 490, e.g. in the DRM 490 or logging agent 150, or somewhere else on the SIM 400.

As was briefly discussed in the foregoing, the usage information of the invention can be stored in a secure environment as a part of the security operation, instead of being authenticated. If sufficient memory capacity is available, a suitable solution is to store the log 175 in a subscriber identity module 400, as is illustrated in Fig. 8. In order for a client to activate the SIM environment he first has to enter a pin code. This code is a personal code associated with the actual client having a subscription to the network operator. Once activated, generated usage information can be stored in the log 175 in the SIM 400. By storing the generated usage information on the SIM implemented log 175 it is possible to associate the usage information with the individual owning the SIM 400, i.e. having a subscription manifested in a SIM with the network operator. However, if the logged usage information subsequently is to be transmitted to a trusted party, e.g. for being basis for charging or evidence of usages, the usage information is first authenticated, e.g. using the authenticator 160 or AKA module 460 of the SIM 400, before transmission.

The SIM 400 could also be used as a base for a charging mechanism that can be used for payment of digital content in the DRM system. In such a case, the usage information from the logging agent 150 is authenticated by means of for example, the key 466 associated with the subscription with the network operator. The authenticator 160 or AKA module 460 can sign the usage information, cryptographically protect and/or message authenticate it, allowing identification from which SIM 400 (subscriber) the usage information originates. The authenticated usage information is then transferred to the network operator or to a dedicated billing institute (charging server) managing the actual charging of the digital content. In such a case, the usage information specifies the amount to be charged from the client, or some information, e.g. an identifier of used digital content and total usage time, allowing the billing institute to calculate the total chargeable amount. This amount is then charged from an account associated with the client, from the client's subscription (mobile telephone bill), or by some other means.

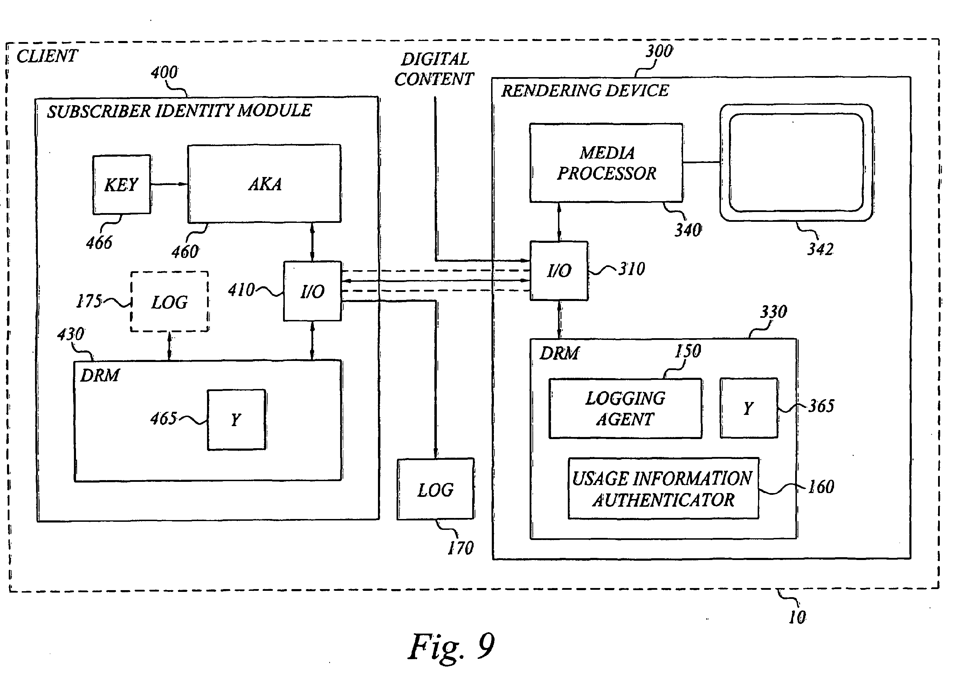

Fig. 9 illustrates a portion of a client system 10 incorporating a subscriber identity module 400. Similar to Fig. 4, this client system 10 includes a stand-alone rendering device 300 with media processor 340 and screen 342 for rendering ordered digital content. The rendering device 300 further includes a DRM agent 330 incorporating a logging agent 150 and usage information authenticator 160 according to the invention. In Fig. 9, only the SIM 400 of the receiving device is illustrated. However, during operation this SIM 400 is cooperating with/arranged in the receiving device with an I/O communication unit for enabling ordering and reception of digital content.

The client system of Fig. 9 (and Fig. 4) has a distributed DRM functionality, with one DRM agent 430 associated with the SIM 400 (receiving device) and one DRM agent 330 associated with the rendering device 300. During operation, the receiving device typically orders a digital content and receives a ticket from a network operator. A copy of the ticket is transmitted to a content provider, which downloads or steams the digital content to the receiving device. This digital content is then forwarded, possible after decryption, to the rendering device, where the actual rendering takes place. The logging agent 150 in the DRM agent 330 then generates usage information about the rendering of the content. This usage information is preferably authenticated by the authenticator 160 and is transmitted through an input/output (I/O) unit 310 to the SIM 400, where a corresponding I/O unit 410 receives the information and forwards it to a log, e.g. an external log 170 for storage. Alternatively, or in addition, the usage information is stored in a log 175 of the SIM 400. If the AKA module 460 has algorithms for performing authentication and possible encryption of the generated usage information, the authenticator 160 of the DRM agent 330 could be omitted. In such a case, upon reception of the usage information from the rendering device 300, the I/O unit 410 typically forwards the information to the AKA module 460. As was mentioned above, the AKA module 460 authenticates the usage information preferably by using a subscription key 466 associated with the SIM 400, before the information is forwarded to the log.

With such an arrangement it might be advisable to tamper-resistantly configure the SIM 400 and rendering device 300 with rendering-device specific key information for allowing secure communication between the two DRM agents 330 and 430. The device key information may be a shared secret key, or an asymmetric key pair, allowing authentication and/or protection of information, including the usage information, communicated between the DRM agents 330, 430. The device key, y, is normally tamper-resistantly stored 365 in the rendering device 300. The infrastructure of the network operator and/or trusted certification party can be used for securely transferring corresponding device key information for storage 465 in the SIM 400, as will be described in more detail below.

In the particular example of Fig. 9, which relates to a symmetric device key, both the SIM 400 and the rendering device 300 are configured with the shared secret rendering-device specific key, y, or a representation thereof. The shared device key is implemented in the DRM agents 330, 430 of the involved entities. This is a perfectly valid solution, for example when the DRM agent 330 of the rendering device 300 is implemented as a hardware circuit. However, it may be beneficial to tamper-resistantly implement the device key, y, outside of the DRM agent 330 in the rendering device 300, especially when the DRM agent 330 is a software-based application. In such a case, the device key, y, (or its representation) is preferably stored within a special tamper-resistant environment, such as a dedicated security circuit, in the rendering device 300.

During operation, the logging agent 150 in DRM agent 330 compiles the usage information as the rendering device 300 consumes the digital content, and sends the information to the DRM agent 430 of the SIM 400, preferably using the authenticated and/or secure device-key based communication. For example, it is beneficial to use the device key to integrity protect the compiled usage information. The DRM agent 430 authenticates and/or decrypts the usage information based on corresponding device key information and stores the information in the log 175 and/or forwards the usage information to the AKA module 460 for authentication thereof. Thereafter, the authenticated information can be sent to an external trusted party for logging 170, if desirable.

In a more elaborate communication protocol, the DRM agent 430 and the DRM agent 330 exchange control signals for controlling the rendering process. For example, the DRM agent 330 in the rendering device 300 intermittently generates an acknowledgement ACK signal indicating that the process of using received digital content proceeds without disturbances. The ACK signal is preferably accompanied by usage information from the logging agent 150, e.g. related to the amount of rendering time, amount of successfully rendered data, rendering quality, time delays, buffer overflows, and other data concerning the rendering process. The DRM agent 430 includes functionality for processing this signal information and for sending a socalled forward proceed signal FPS to the DRM agent 330 in response thereto. The FPS signal is required in order for the rendering process to continue, whereas a missing FPS signal causes the rendering process to stop or to proceed according to predetermined limitations, e.g. limited QoS (Quality of Service). The FPS signal may include information, such as a DAC (Device Access Code) extracted from the corresponding ticket by the DRM agent 430 or information obtained by analyzing the log data received from the logging agent 150, that can be used for controlling the rendering process. The DRM agent 330 is thus configured for receiving the FPS signal and for controlling the rendering process in dependence on data associated with the FPS signal. This type of communication protocol may be particularly useful in socalled broadcast applications, where the usage information from the logging agent 150 serves as a basis for charging. If the DRM agent 430 does not receive such usage information, the DRM agent 430 is capable of controlling the continued rendering process by means of the FPS signal.

The DRM agent 430 may also be capable of extracting the usage rules associated with the digital content from the ticket and forward these rules to the rendering device 300 for enforcement by its DRM agent 330. Alternatively, however, the usage rules are sent directly, preferably together with the encrypted digital content, to the rendering device 300 and the DRM agent 330 therein.

This communication protocol preferably utilizes the device-key based communication described above, in which authentication and/or encryption based on usage-device specific key information is performed.

Herebelow, follows a brief description of how a device-key based communication between distributed DRM agents of a client system can be established.

During manufacturing, the rendering device is tamper-resistantly configured with a usage-device specific key y. Note that it is not secure to simply write "y" on the outside of the rendering device, as it could be copied and a cloned, non-secure device could easily be created. Instead, identification information, such as the result of applying some cryptographic function h to the key y may be attached to a "label" on the rendering device when it is sold, or transferred from the rendering device to the associated receiving device of the client system when interconnected, thus making a cryptographic representation of the device key available to a user/the receiving device. When the client wishes to activate the device, he sends the (open) cryptographic representation h(y), or similar identification information, to the operator (or another trusted certification party) who checks that h(y) is assigned to a valid device, retrieves the device key or suitable key information, such as y', derived from the device key, and finally updates the DRM application in the receiving device (or SIM of receiving device) with the device key y or key information derived therefrom.

It is assumed that the operator or another trusted certification party (in some business models, the trusted party may be the device manufacturer) has some key that enables him to invert the function h or otherwise is capable of retrieving suitable device key information, e.g. by using look-up tables, typically known only to the Operator. For example, it may be the case that the device key itself should never be available outside of the rendering device, not even explicitly known by the trusted party. In this case, the trusted party is capable of retrieving key information, such as y', that is based on the actual device key y and perhaps additional input data.

It is also assumed that the device key information is securely transferred from the certification party to the SIM in the receiving device based on some SLIM specific key. Once properly configured in the DRM agent of the SIM, the device key information, i.e. the device key or some other key derived from the device key, may be used for establishing communication (secure and/or authenticated) with the DRM agent in the rendering device. Apparently, if a key derived from the actual device key y is transferred to and implemented in the SIM, the rendering device has to implement some function that based on the device key generates the same key derivative as in the SIM.

Although the present invention in the foregoing mainly has been discussed with reference to embodiments of a content provider providing digital content to a client system over a network, it is also anticipated to employ the logging functionality of the invention in other content and service distribution systems. For example, a service provider may provide a service to a user's client system. When the user subsequently uses the service, logging information about the usage is generated, preferably authenticated and stored. A typical example is payment for utilizing a parking place, e.g. in a multistory car park. A service provider may then provide services for payment of the parking fee using a mobile unit or telephone (client system), controlling a gate or door allowing entrance to and exit from the car park, etc. The generated usage information could then include an identifier of the car park and/or parking place and entrance and exit time (and/or the total time when the parking service is utilized): The generated usage information could then be used for debiting the user associated with the client system.

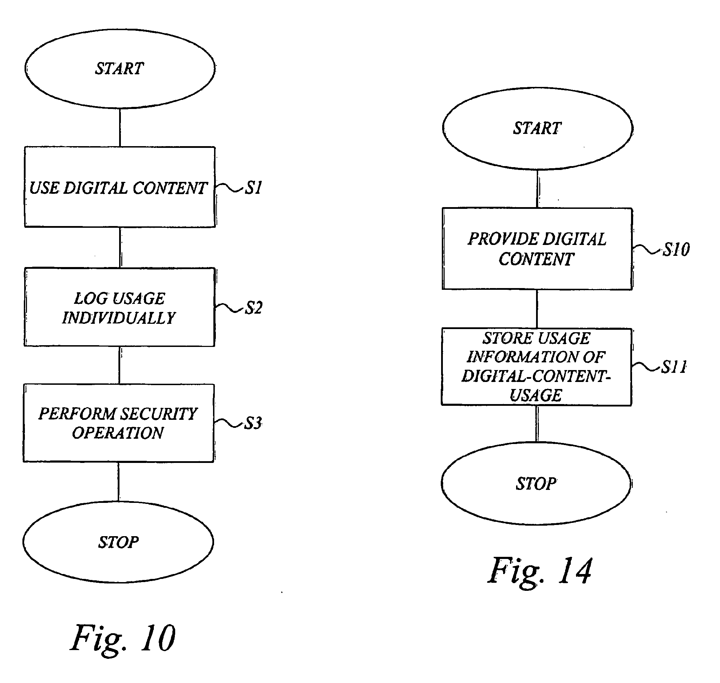

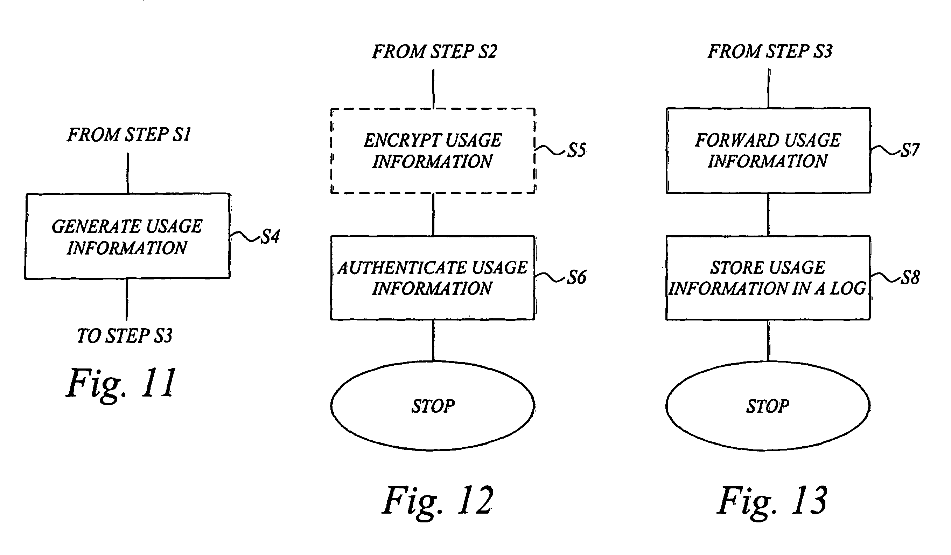

Fig. 10 schematically summarizes the usage monitoring method according to the present invention. In step S1 the client system or module uses, e.g. renders, saves, forwards, copies, executes, deletes and/or modifies, digital content received from a content provider over a network. Step S2 logs usage information concerning the usage of the digital content individually for each usage to be monitored. A security operation enabling identification from whom (client, individual or account) the usage information originates is performed in step S3. The method then ends. Fig. 11 illustrates the logging step S2 of Fig. 10 in more detail. In step S4, a logging agent arranged in the client system generates information regarding the usage. This usage information generation is preferably performed tamper resistantly, e.g. by implementing the logging agent in a tamper-resistant environment, reducing the risk of user manipulating or deleting the generated usage information. The method continues to step S3. The security-performing step of Fig. 10 is illustrated in more detail in Fig. 12. In the optional step S5, the usage information is cryptographically protected, e.g. by a symmetric key or a public key, where the associated private decryption key is securely kept at a trusted location. Step S6 performs at least a part of an authentication of the usage information. Such authentication uses a signing key, protected key or some other cryptographic information associated with the client to authenticate the usage information as being associated with the client. The method is then ended. Further optional steps of the monitoring method of the invention are illustrated in Fig. 13. In step S7, the usage information is forwarded from the client system to a trusted party, e.g. a network operator, a charging server or a billing institute. The forwarded usage information is then stored as a log entry in the log in step S8. The logged usage information may then be used as basis for charging for the digital content, as evidence of actually performed usage if a dispute later arises between the client and the content provider, for non-repudiation purposes and/or as basis for statistics of client usages of digital content. The method is then completed.

A DRM method according to the present invention is schematically illustrated in the flow diagram of Fig. 14. Step S10 provides digital content from a content server to a client system over a network. In the client system the received digital content is used and a logging agent according to the invention generates information concerning the usage individually for each one of a set of client-usages. In addition, security operation (authentication) is performed on the usage information enabling identification of the client that has used the digital content. The generated and origin-identifiable usage information is then received and stored as a log entry in a log in step S 11. The DRM method is then ended.

The embodiments described above are merely given as examples, and it should be understood that the present invention is not limited thereto. Further modifications, changes and improvements, which retain the basic underlying principles disclosed and claimed herein are within the scope of the invention as defined by the appended claims.

### REFERENCES

[1] A.J. Menezes, P.C. van Oorschot and S.C. Vanstone, "Handbook of Applied Cryptography", CRC Press.
[2] L. Kaati, "Cryptographic Techniques and Encodings for Digital Rights Management", Master's Thesis in Computer Science, Department of Numerical Analysis and Computer Science, Royal Institute of Technology, Stockholm University, 2001.
[3] Swedish patent application No. 0101295-4 filed April, 2001.
[4] ISO/IEC 13888-1 Information technology, Security techniques, Non-repudiation, Part 1: General, 1997
[5] ISO/IEC 13888-2 Information technology, Security techniques, Non-repudiation, Part 2: Mechanisms using symmetric techniques, 1998
[6] ISO/IEC 13888-3 Information technology, Security techniques, Non-repudiation, Part 3: Mechanisms using asymmetric techniques, 1997
[7] J. Postel, "User Datagram Protocol", RFC 768, IETF, August 1980.
[8] V. Jacobson, S.L. Cashier, R. Frederick and H. Schulzrinne, "RTP: A Transport Protocol for Real-Time Applications", RFC 1889, IETF, November 2001.
[9] M. Baugher, R. Blom, E. Carrara, D. McGrew, M. Näslund, K. Norrman and D. Oran "The Secure Real Time Transport Protocol", draft-ietf-avt-srtp-05.txt, IETF, June 2002.
[10] "Subscriber Identity Modules (SIM), Functional Characteristics", ETSI TS 100 922, GSM 02.17, Technical Specification Digital Cellular Telecommunications system, Version 3.2.0, February 1992.
[11] "Specification of the Subscriber Identity Module - Mobile Equipment (SIM - ME) interface" 3GPP TS 11.11, ETSI TS 100 977, Technical Specification 3rd Generation Partnership Project, Technical Specification Group Terminals, Version 8.5.0, 1999.
[12] "GSM API for SIM toolkit, Stage 2", 3GGP TS 03.19, ETSI TS 101 476, Technical Specification 3rd Generation Partnership Project, Technical Specification Group Terminals, Version 8.4.0, 1999.
[13] "Specification of the SIM Application Toolkit for the Subscriber Identity Module - Mobile Equipment (SIM - ME) interface", 3GGP TS 11.14, ETSI TS 101 267, Technical Specification 3rd Generation Partnership Project, Technical Specification Group Terminals, Version 8.10.0, 1999.
[14] "Security Mechanism for SIM Application Toolkit, Stage 2", 3GGP TS 03.48, ETSI TS 101 181, Technical Specification 3rd Generation Partnership Project, Technical Specification Group Terminals, Version 8.8.0, 1999.
[15] "SIM Application Toolkit (USAT)", 3GGP TS 31.111, ETSI TS 131 111, Technical Specification 3rd Generation Partnership Project, Technical Specification Group Terminals, Version 4.4.0, Release 4.

## Claims

1. A method of monitoring client-usage of streamed or downloaded digital content provided by a content provider (30) to a client system (10) over a network (40), said method comprising the steps of:
- logging (S2) usage by generating usage information concerning usage of said digital content, by receiving input data from different external means dependent on the usage information to be generated;
- performing (S3) a security operation to enable identification of at least one of an account and a client for linking said usage information to the identified account and/or client, and
monitoring the client-usage of streamed or downloaded digital content by using the generated usage information, and wherein the client is identified by said security operation, wherein said usage information is maintained in a log (175) in said client system (10), and said step of performing a security operation comprises the step of storing said log (175) in a tamper-resistant environment associated with said client system (10) and wherein said usage information comprises a representation (172-1) of said client-used digital content; usage quality information (172-2); and time information (172-N) related to usage of said digital content,

2. The method according to claim 1, wherein said step of performing a security operation comprises the step of performing at least part of an authentication of said usage information.

3. The method according to claim 2, wherein said step of performing at least part of authentication comprises at least one of: - signing said usage information by a signing key (166; 466); - encrypting said usage information by an encryption key (166; 466); and - appending an authentication tag (174), computed by an authentication key, to said usage information.

4. The method according to claim 1, wherein said quality information (172-2) comprises at least one of:
- bandwidth of said used digital content;
- sample rate said digital content;
- data compression of said digital content;
- resolution of said used digital content;
- time information(172-N) related to usage of said digital content; and
- information of any disruptions during the usage of said digital content.

5. The method according to claim 1, wherein said usage information comprises at least one of:
- form of usage;
- identification of a content-usage device (300);
- information on payment of said digital content;
- time information related to transmittal of said digital content from said content provider (30) to said client system (10); and
- time information related to reception of said digital content by said client system (10).

6. The method according to claim 1, wherein said generating step comprises the step:of:
- tamper-resistantly generating said usage information; and wherein the method comprises the further step of:
- storing said usage information as a log entry (172) in a user-tamper- resistant log (170; 175; 175-1, 175-2).

7. The method according to claim 1, further comprising the step of forwarding said usage information from said client system (10) to an external trusted party for storage therein as log entry (172) in a usage log (170).

8. The method according to claim 1, wherein said digital content is provided as streaming data and said digital data is used by said client system (10), said step of logging usage information comprises the step of for each on-going client-usage of streaming data, intermittently logging usage information during said client-usage.

9. The method according to claim 8, further comprising the step of intermittently forwarding said intermittently logged usage information to said content provider (30) for confirming reception and rendering of the data.

10. The method according to claim 9, wherein said usage information is included into receive reports associated with the report mechanism of the streaming protocol used for streaming said data.

11. Client system (10) capable of using digital streamed or downloaded content provided by a content provider (30) over a network (40) to a client system, said client system (10) comprising:
a logging agent (150) comprising a generator (152) for generating usage information concerning usage of said digital content, by receiving input data from different external means dependent on the usage information to be generated;
means for performing (160; 460) a security operation to enable identification of at least one of an account and a client for linking said usage information to the identified account and/or client, and wherein the logging agent further is adapted to monitor the client-usage of streamed or downloaded digital content by using the generated usage information, and
wherein the client is identified by said security operation, wherein said usage information is maintained in a log (175) in said client system (10), and said security operation performing means is configured for storing said log (175) in a tamper-resistant environment associated with said client system (10) and wherein said usage information comprises a representation (172-1) of said client-used digital content; usage quality information (172-2); and time information (172-N) related to usage of said digital content,

12. The client system according to claim 11, wherein said security operation performing means (160; 460) is configured for performing at least part of an authentication of said usage information.

13. The client system according to claim 12, wherein said security operation performing means (160; 460) comprises at least one of:
- means (160; 460) for signing said usage information by a signing key (166; 466);
- means (160; 460) for encrypting said usage information by an encryption key (166; 466); and
- means (160; 460) for computing an authentication tag (172) by an authentication key and appending said authentication tag (172) to said usage information.

14. The client system according to claim 11, wherein said generator (152) comprises:
- means (152) for tamper-resistantly generating said usage information; and the logging agent comprises further means for storing (154; 156) said usage information as a log entry (172) in a usage log (170; 175).

15. The client system according to claim 11, wherein said logging agent (175) further comprises means (156) for forwarding said usage information to an external trusted party for storage therein as a log entry (172) in a usage log (170).

16. The client system according to claim 11, further comprising:
- a usage device (300) adapted for using said provided digital content; and
- a first digital rights management (DRM) agent (130; 330), at least partly implemented in said usage device (300), having functionality for enabling usage of said digital content.

17. The client system according to claim 16, further comprising:
- a second DRM agent (230; 430) implemented in said client system (10), having functionality for enabling reception of said digital content from said content provider (30); and
means (210 ;310 ; 410) for communication between said first DRM agent (330) and said second DRM agent (230; 430), said first DRM agent (330) comprising means for transferring a first control signal associated with said usage information to said second DRM agent (230; 430) and said second DRM agent (230; 430) comprises means for processing signal data associated with said first control signal to generate a second control signal, and means for sending said second control signal to said first DRM agent (330) for controlling the digital-content usage process.

18. The client system according to claim 14, further comprising a tamper resistant module, in which said logging agent (150) is implemented.

19. The client system according to claim 18, wherein said tamper resistant module is a subscriber identity module (400).

20. The client system according to claim 19, wherein said logging agent (150) is at least partly implemented as an application in an application environment (490) provided by an application toolkit associated with said subscriber identity module (400).

21. The client system according to claim 20, wherein said logging agent application is downloaded into said subscriber identity module (400) over said network (40) from a network service provider (20; 30) associated with said subscriber identity module (400).

22. The client system according to claim 11, wherein said digital content is provided as streaming data and said client system (10) comprises means (300) for using said streaming data, and said logging agent (150) is configured to, for each on- going client-usage of streaming data, intermittently generate usage information during said client-usage.

23. The client system according to claim 22, further comprising means (156) for intermittently forwarding said intermittently generated usage information to said content provider (30) for confirming reception and usage of the data.

24. The client system according to claim 23, wherein said usage information is included into receive-reports associated with the report mechanism of the streaming protocol used for streaming said data.

## Patentansprüche

1. Verfahren zur Überwachung der Client-Nutzung von datenstromförmig übertragenem oder heruntergeladenem digitalem Inhalt, der durch einen Inhaltsanbieter (30) an ein Clientsystem (10) über ein Netzwerk (40) übergeben wird, wobei das Verfahren die folgenden Schritte umfasst:
- Protokollieren (S2) der Nutzung durch Erzeugung von Nutzungsinformation hinsichtlich der Nutzung des digitalen Inhalts, durch Empfangen von Eingangsdaten von verschiedenen externen Mitteln in Abhängigkeit von der zu erzeugenden Nutzungsinformation;
- Ausführen (S3) einer Sicherheitsoperation, um die Identifikation zumindest eines von Folgendem, nämlich eines Kontos und/oder eines Clients zur Verknüpfung der Nutzungsinformation mit dem identifizierten Konto und/oder Client zu ermöglichen, und
- Überwachen der Client-Nutzung von datenstromförmig übertragenem oder heruntergeladenem digitalem Inhalt durch Nutzung der erzeugten Nutzungsinformation, und wobei der Client durch die Sicherheitsoperation identifiziert wird, wobei die Nutzungsinformation in einem Protokoll (175) in dem Clientsystem (10) aufbewahrt wird und der Schritt der Ausführung einer Sicherheitsoperation den folgenden Schritt umfasst: Speichern des Protokolls (175) in einer manipulationssicheren Umgebung, die dem Clientsystem (10) zugeordnet ist, und wobei die Nutzungsinformation eine Darstellung (172-1) des clientgenutzten digitalen Inhalts; Nutzungsqualitätsinformation (172-2); und Zeitinformation (172-N), bezogen auf die Nutzung des digitalen Inhalts, umfasst.

2. Verfahren nach Anspruch 1, wobei der Schritt der Ausführung einer Sicherheitsoperation den folgenden Schritt umfasst: Ausführen zumindest eines Teils einer Echtheitsprüfung der Nutzungsinformation.

3. Verfahren nach Anspruch 2, wobei der Schritt der Ausführung zumindest eines Teils der Echtheitsprüfung zumindest eines von Folgendem umfasst:
- Signieren der Nutzungsinformation durch einen Signierschlüssel (166; 466);
- Verschlüsseln der Nutzungsinformation durch einen Verschlüsselungsschlüssel (166; 466); und
- Anhängen eines durch einen Echtheitsprüfungsschlüssel berechneten Echtheitsprüfungskennzeichens (174) an die Nutzungsinformation.

4. Verfahren nach Anspruch 1, wobei die Qualitätsinformation (172-2) zumindest eines von Folgendem umfasst:
- Bandbreite des genutzten digitalen Inhalts;
- Abtastrate des digitalen Inhalts;
- Datenkompression des digitalen Inhalts;
- Auflösung des genutzten digitalen Inhalts;
- Zeitinformation (172-N), bezogen auf die Nutzung des digitalen Inhalts; und
- Information über irgendwelche Unterbrechungen während der Nutzung des digitalen Inhalts.

5. Verfahren nach Anspruch 1, wobei die Nutzungsinformation zumindest eines von Folgendem umfasst:
- Form der Nutzung;
- Identifikation einer Inhaltsnutzungsvorrichtung (300);
- Information über die Bezahlung des digitalen Inhalts;
- Zeitinformation, bezogen auf die Übertragung des digitalen Inhalts von dem Inhaltsanbieter (30) an das Clientsystem (10); und
- Zeitinformation, bezogen auf den Empfang des digitalen Inhalts durch das Clientsystem (10).

6. Verfahren nach Anspruch 1, wobei der Erzeugungsschritt den folgenden Schritt umfasst:
- manipulationssicheres Erzeugen der Nutzungsinformation; und wobei das Verfahren den folgenden weiteren Schritt umfasst:
- Speichern der Nutzungsinformation als Protokolleintrag (172) in einem manipulationssicheren Protokoll (170; 175; 175-1, 175-2).

7. Verfahren nach Anspruch 1, ferner umfassend den folgenden Schritt: Weiterleiten der Nutzungsinformation von dem Clientsystem (10) an einen externen vertrauenswürdigen Teilnehmer zur dortigen Speicherung als Protokolleintrag (172) in einem Nutzungsprotokoll (170).

8. Verfahren nach Anspruch 1, wobei der digitale Inhalt als datenstromförmige Daten bereitgestellt wird und die digitalen Daten durch das Clientsystem (10) genutzt werden, wobei der Schritt der Protokollierung von Nutzungsinformation den folgenden Schritt umfasst: für jede laufende Client-Nutzung von datenstromförmigen Daten erfolgendes intermittierendes Protokollieren von Nutzungsinformation während der Client-Nutzung.

9. Verfahren nach Anspruch 8, ferner umfassend den folgenden Schritt: intermittierendes Weiterleiten der intermittierend protokollierten Nutzungsinformation an den Inhaltsanbieter (30) zur Bestätigung des Empfangs und zur Wiedergabe der Daten.

10. Verfahren nach Anspruch 9, wobei die Nutzungsinformation in Empfangsmeldungen aufgenommen wird, die dem Meldungsmechanismus des Datenstromübertragungsprotokolls, das zur Datenstromübertragung der Daten genutzt wird, zugeordnet sind.

11. Clientsystem (10) mit der Fähigkeit zur Nutzung von datenstromförmig übertragenem oder heruntergeladenem digitalem Inhalt, der durch einen Inhaltsanbieter (30) über ein Netzwerk (40) an ein Clientsystem übergeben wird, wobei das Clientsystem (10) umfasst:
- einen Protokollierungsagent (150) mit einem Generator (152) zur Erzeugung von Nutzungsinformation hinsichtlich der Nutzung des digitalen Inhalts, durch Empfangen von Eingangsdaten von verschiedenen externen Mitteln in Abhängigkeit von der zu erzeugenden Nutzungsinformation;
- Mittel zur Ausführung (160; 460) einer Sicherheitsoperation, um die Identifikation zumindest eines von Folgendem, nämlich eines Kontos und/oder eines Clients zur Verknüpfung der Nutzungsinformation mit dem identifizierten Konto und/oder Client zu ermöglichen, und wobei der Protokollierungsagent ferner entsprechend angepasst ist, um die Client-Nutzung von datenstromförmig übertragenem oder heruntergeladenem digitalem Inhalt durch Nutzung der erzeugten Nutzungsinformation zu überwachen und wobei der Client durch die Sicherheitsoperation identifiziert wird, wobei die Nutzungsinformation in einem Protokoll (175) in dem Clientsystem (10) aufbewahrt wird und die Sicherheitsoperationsausführungsmittel dafür konfiguriert sind, das Protokoll (175) in einer manipulationssicheren Umgebung, die dem Clientsystem (10) zugeordnet ist, zu speichern und wobei die Nutzungsinformation eine Darstellung (172-1) des clientgenutzten digitalen Inhalts; Nutzungsqualitätsinformation (172-2); und Zeitinformation (172-N), bezogen auf die Nutzung des digitalen Inhalts, umfasst.

12. Clientsystem nach Anspruch 11, wobei die Sicherheitsoperationsausführungsmittel (160; 460) dafür konfiguriert sind, zumindest einen Teil einer Echtheitsprüfung der Nutzungsinformation auszuführen.

13. Clientsystem nach Anspruch 12, wobei die Sicherheitsoperationsausführungsmittel (160; 460) zumindest eines von Folgendem umfassen:
- Mittel (160; 460) zum Signieren der Nutzungsinformation durch einen Signierschlüssel (166; 466);
- Mittel (160; 460) zum Verschlüsseln der Nutzungsinformation durch einen Verschlüsselungsschlüssel (166; 466); und
- Mittel (160; 460) zum Berechnen eines Echtheitsprüfungskennzeichens (172) durch einen Echtheitsprüfungsschlüssel und Anhängen des Echtheitsprüfungskennzeichens (172) an die Nutzungsinformation.

14. Clientsystem nach Anspruch 11, wobei der Generator (152) umfasst:
- Mittel (152) zur manipulationssieheren Erzeugung der Nutzungsinformation; und der Protokollierungsagent weitere Mittel zur Speicherung (154; 156) der Nutzungsinformation als Protokolleintrag (172) in einem Nutzungsprotokoll (170; 175) umfasst.

15. Clientsystem nach Anspruch 11, wobei der Protokollierungsagent (175) ferner Mittel (156) zur Weiterleitung der Nutzungsinformation an einen externen vertrauenswürdigen Teilnehmer zur dortigen Speicherung als Protokolleintrag (172) in einem Nutzungsprotokoll (170) umfasst.

16. Clientsystem nach Anspruch 11, ferner umfassend:
- eine Nutzungsvorrichtung (300), die entsprechend angepasst ist, um den bereitgestellten digitalen Inhalt zu nutzen; und
- einen ersten Agent zur Verwaltung digitaler Rechte (DRM) (130; 330), der zumindest teilweise in der Nutzungsvorrichtung (300) implementiert ist, mit einer Funktionalität zur Ermöglichung der Nutzung des digitalen Inhalts.

17. Clientsystem nach Anspruch 16, ferner umfassend:
- einen zweiten DRM-Agent (230; 430), der in dem Clientsystem (10), implementiert ist, mit einer Funktionalität zur Ermöglichung des Empfangs des digitalen Inhalts von dem Inhaltsanbieter (30); und
- Mittel (210; 310; 410) zur Kommunikation zwischen dem erstem DRM-Agent (330) und dem zweiten DRM-Agent (230; 430), wobei der erste DRM-Agent (330) Mittel zur Weitergabe eines ersten Steuersignals, das der Nutzungsinformation zugeordnet ist, an den zweiten DRM-Agent (230; 430) umfasst und der zweite DRM-Agent (230; 430) umfasst: Mittel zur Verarbeitung von Signaldaten, die dem ersten Steuersignal zugeordnet sind, um ein zweites Steuersignal zu erzeugen, und Mittel zum Senden des zweiten Steuersignals an den ersten DRM-Agent (330) zur Steuerung des Digitalinhaltsnutzungsprozesses.

18. Clientsystem nach Anspruch 14, ferner umfassend ein manipulationssicheres Modul, in dem der Protokollierungsagent (150) implementiert ist.

19. Clientsystem nach Anspruch 18, wobei das manipulationssichere Modul ein Teilnehmeridentitätsmodul (400) ist.

20. Clientsystem nach Anspruch 19, wobei der Protokollierungsagent (150) zumindest teilweise als Anwendung in einer Anwendungsumgebung (490) implementiert ist, die durch einen Anwendungswerkzeugsatz bereitgestellt wird, der dem Teilnehmeridentitätsmodul (400) zugeordnet ist.

21. Clientsystem nach Anspruch 20, wobei die Protokollierungsagent-Anwendung in das Teilnehmeridentitätsmodul (400) über das Netzwerk (40) von einem Netzwerkdienstanbieter (20; 30), der dem Teilnehmeridentitätsmodul (400) zugeordnet ist, herunterladen wird.

22. Clientsystem nach Anspruch 11, wobei der digitale Inhalt als datenstromförmige Daten bereitgestellt wird und das Clientsystem (10) Mittel (300) zur Nutzung der datenstromförmigen Daten umfasst und der Protokollierungsagent (150) dafür konfiguriert ist, für jede laufende Client-Nutzung von datenstromförmigen Daten Nutzungsinformation während der Client-Nutzung intermittierend zu erzeugen.

23. Clientsystem nach Anspruch 22, ferner umfassend Mittel (156) zum intermittierenden Weiterleiten der intermittierend erzeugten Nutzungsinformation an den Inhaltsanbieter (30) zur Bestätigung des Empfangs und der Nutzung der Daten.

24. Clientsystem nach Anspruch 23, wobei die Nutzungsinformation in Empfangsmeldungen aufgenommen wird, die dem Meldungsmechanismus des Datenstromübertragungsprotokolls, das zur Datenstromübertragung der Daten genutzt wird, zugeordnet sind.

## Revendications

1. Procédé destiné à surveiller l'utilisation, par un système client, de contenu numérique téléchargé ou diffusé en continu fourni par un fournisseur de contenu (30) à un système client (10) sur un réseau (40), ledit procédé comportant les étapes ci-dessous consistant à :
- journaliser (S2) l'utilisation en générant des informations connexes à l'utilisation concernant l'utilisation dudit contenu numérique, en recevant des données d'entrée de différents moyens extérieurs dépendant des informations connexes à l'utilisation à générer ;
- mettre en oeuvre (S3) une opération de sécurité pour permettre l'identification d'au moins l'un parmi un compte et un système client en vue d'associer lesdites informations connexes à l'utilisation au compte et/ou au système client identifié(s) ; et
- surveiller l'utilisation, par le système client, de contenu numérique téléchargé ou diffusé en continu en utilisant les informations connexes à l'utilisation générées, et dans lequel le système client est identifié par ladite opération de sécurité, dans lequel lesdites informations connexes à l'utilisation sont conservées dans un journal (175) au sein dudit système client (10), et ladite étape consistant à mettre en oeuvre une opération de sécurité comporte l'étape consistant à stocker ledit journal (175) dans un environnement inviolable associé audit système client (10), et dans lequel lesdites informations connexes à l'utilisation incluent une représentation (172-1) dudit contenu numérique utilisé par le système client ; des informations connexes à la qualité d'utilisation (172-2), et des informations temporelles (172-N) connexes à l'utilisation dudit contenu numérique.

2. Procédé selon la revendication 1, dans lequel ladite étape consistant à mettre en oeuvre une opération de sécurité comporte l'étape consistant à mettre en oeuvre au moins une partie d'une authentification desdites informations connexes à l'utilisation.

3. Procédé selon la revendication 2, dans lequel ladite étape consistant à mettre en oeuvre au moins une partie d'une authentification comporte au moins l'une des étapes ci-dessous consistant à :
- signer lesdites informations connexes à l'utilisation par une clé de signature (166 ; 466) ;- chiffrer lesdites informations connexes à l'utilisation par une clé de chiffrement (166 ; 466), et
- annexer une balise d'authentification (174), calculée par une clé d'authentification, auxdites informations connexes à l'utilisation.

4. Procédé selon revendication 1, dans lequel lesdites informations connexes à la qualité d'utilisation (172-2) comportent au moins l'une des informations ci-dessous :
- la largeur de bande dudit contenu numérique utilisé ;
- le taux d'échantillonnage dudit contenu numérique ;
- la compression des données dudit contenu numérique ;
- la résolution dudit contenu numérique utilisé ;
- des informations temporelles (172-N) connexes à l'utilisation dudit contenu numérique ; et
- des informations relatives à des perturbations quelconques lors de l'utilisation dudit contenu numérique.

5. Procédé selon la revendication 1, dans lequel lesdites informations connexes à l'utilisation comportent au moins l'une des informations ci-dessous :
- le type d'utilisation ;
- l'identification d'un dispositif d'utilisation de contenu (300) ;
- des informations sur le paiement dudit contenu numérique ;
- des informations temporelles connexes à la transmission dudit contenu numérique dudit fournisseur de contenu (30) audit système client (10) ; et
- des informations temporelles connexes à la réception dudit contenu numérique par ledit système client (10).

6. Procédé selon revendication 1, dans lequel ladite étape de génération comporte l'étape ci-dessous consistant à :
- générer lesdites informations connexes à l'utilisation de manière inviolable, et dans lequel le procédé comporte en outre l'étape ci-dessous consistant à :
- stocker lesdites informations connexes à l'utilisation sous la forme d'une entrée de journal (172) dans un journal inviolable par l'utilisateur (170 ; 175 ; 175-1, 175-2).

7. Procédé selon revendication 1, comprenant en outre l'étape consistant à acheminer lesdites informations connexes à l'utilisation dudit système client (10) à une partie externe de confiance en vue d'un stockage sous la forme d'une entrée de journal (172) dans un journal des utilisations (170).

8. Procédé selon la revendication 1, dans lequel ledit contenu numérique est délivré sous la forme de données de diffusion en continu et dans lequel lesdites données numériques sont utilisées par ledit système client (10), ladite étape consistant à journaliser des informations connexes à l'utilisation comportant une étape consistant à, pour chaque utilisation en cours de données de diffusion en continu par le système client, journaliser par intermittence les informations connexes à l'utilisation au cours de ladite utilisation par le système client.

9. Procédé selon la revendication 8, comportant en outre une étape consistant à acheminer par intermittence lesdites informations connexes à l'utilisation journalisées par intermittence audit fournisseur de contenu (30) pour confirmer la réception et le rendu des données.

10. Procédé selon la revendication 9, dans lequel lesdites informations connexes à l'utilisation sont incluses dans des rapports sur la réception associés au mécanisme de création de rapports du protocole de diffusion en continu utilisé pour la diffusion desdites données.

11. Système client (10) apte à utiliser un contenu numérique téléchargé ou diffusé en continu fourni par un fournisseur de contenu (30) sur un réseau (40) à un système client, ledit système client (10) comportant :
- un agent de journalisation (150) comportant un générateur (152) pour générer des informations connexes à l'utilisation concernant l'utilisation dudit contenu numérique, en recevant des données d'entrée de différents moyens extérieurs qui dépendent des informations connexes à l'utilisation devant être générées ;
- un moyen permettant de mettre en oeuvre (160 ; 460) une opération de sécurité pour permettre l'identification d'au moins l'un parmi un compte et un système client pour associer lesdites informations connexes à l'utilisation au compte et/ou au système client identifié ; et dans lequel l'agent de journalisation est en outre apte à surveiller l'utilisation, par le système client, de contenu numérique téléchargé ou diffusé en continu en utilisant les informations connexes à l'utilisation générées, et dans lequel le système client est identifié par ladite opération de sécurité, dans lequel, lesdites informations connexes à l'utilisation sont conservées dans un journal (175) dans ledit système client (10), et ledit moyen permettant de mettre en oeuvre une opération de sécurité est configuré de manière à stocker ledit journal (175) dans un environnement inviolable associé audit système client (10), et dans lequel lesdites informations connexes à l'utilisation incluent une représentation (172-1) dudit contenu numérique utilisé par le système client ; des informations connexes à la qualité d'utilisation (172-2), et des informations temporelles (172-N) connexes à l'utilisation dudit contenu numérique.

12. Système client selon la revendication 11, dans lequel ledit moyen permettant de mettre en oeuvre une opération de sécurité (160 ; 460) est configuré de manière à mettre en oeuvre au moins une partie d'une authentification desdites informations connexes à l'utilisation.

13. Système client selon la revendication 12, dans lequel ledit moyen permettant de mettre en oeuvre une opération de sécurité (160 ; 460) comporte au moins l'un des moyens ci-après :
- un moyen (160 ; 460) pour signer lesdites informations connexes à l'utilisation par le biais d'une clé de signature (166 ; 466) ;
- un moyen (160 ; 460) pour chiffrer lesdites informations connexes à l'utilisation par le biais d'une clé de chiffrement (166 ; 466) ; et
- un moyen (160 ; 460) pour calculer une balise d'authentification (172) par le biais d'une clé d'authentification, et pour annexer ladite balise d'authentification (172) auxdites informations connexes à l'utilisation.

14. Système client selon la revendication 11, dans lequel ledit générateur (152) comporte :
- un moyen (152) pour générer de manière inviolable lesdites informations connexes à l'utilisation ; et l'agent de journalisation comporte en outre un moyen pour stocker (154 ; 156) lesdites informations connexes à l'utilisation sous la forme d'une entrée de journal (172) dans un journal des utilisations (170, 175).

15. Système client selon la revendication 11, dans lequel ledit agent de journalisation (175) comporte en outre un moyen (156) pour acheminer lesdites informations connexes à l'utilisation à une partie externe de confiance en vue d'un stockage sous la forme d'une entrée de journal (172) dans un journal des utilisations (170).

16. Système client selon la revendication 11, comprenant en outre :
- un dispositif d'utilisation (300) apte à utiliser ledit contenu numérique fourni ; et
- un premier agent de gestion des droits numériques (DRM) (130 ; 330), au moins en partie mis en oeuvre dans ledit dispositif d'utilisation (300), présentant une fonctionnalité pour permettre l'utilisation dudit contenu numérique.

17. Système client selon la revendication 16, comprenant en outre :
- un second agent de gestion DRM (230 ; 430) mis en oeuvre dans ledit système client (10), présentant une fonctionnalité pour permettre la réception dudit contenu numérique en provenance dudit fournisseur de contenu (30) ; et
- un moyen (210 ; 310 ; 410) de communication entre ledit premier agent de gestion DRM (330) et ledit second agent de gestion DRM (230 ; 430), ledit premier agent de gestion DRM (330) comprenant un moyen pour transférer un premier signal de commande associé auxdites informations connexes à l'utilisation audit second agent de gestion DRM (230 ; 430) et ledit second agent de gestion DRM (230 ; 430) comportant un moyen pour traiter des données de signal associées audit premier signal de commande en vue de générer un second signal de commande, et un moyen pour envoyer ledit second signal de commande audit premier agent de gestion DRM (330) en vue de commander le processus d'utilisation de contenu numérique.

18. Système client selon la revendication 14, comprenant en outre un module inviolable, dans lequel ledit agent de journalisation (150) est mis en oeuvre.

19. Système client selon la revendication 18, dans lequel ledit module inviolable est un module d'identification de l'abonné (400).

20. Système client selon la revendication 19, dans lequel ledit agent de journalisation (150) est au moins partiellement mis en oeuvre en tant qu'une application dans un environnement d'application (490) fourni par une boîte à outils d'application associée audit module d'identification de l'abonné (400).

21. Système client selon la revendication 20, dans lequel ladite application d'agent de journalisation est téléchargée vers ledit module d'identification de l'abonné (400) sur ledit réseau (40) à partir d'un fournisseur de service réseau (20 ; 30) associé audit module d'identification de l'abonné (400).

22. Système client selon la revendication 11, dans lequel ledit contenu numérique est fourni en tant que données de diffusion en continu et ledit système client (10) comporte un moyen (300) permettant d'utiliser lesdites données de diffusion en continu, et ledit agent de journalisation (150) est configuré de manière à, pour chaque utilisation en cours de données de diffusion en continu par le système client, générer par intermittence les informations connexes à l'utilisation au cours de ladite utilisation par le système client.

23. Système client selon la revendication 22, comprenant en outre un moyen (156) pour acheminer par intermittence lesdites informations connexes à l'utilisation générées par intermittence audit fournisseur de contenu (30) en vue de confirmer la réception et l'utilisation des données.

24. Système client selon la revendication 23, dans lequel lesdites informations connexes à l'utilisation sont incluses dans des rapports sur la réception associés au mécanisme de création de rapports du protocole de diffusion en continu utilisé pour la diffusion desdites données.
